(19) Europäisches Patentamt
European Patent Office
Office européen des brevets

(11) **EP 3 029 490 B1**

(12) **EUROPÄISCHE PATENTSCHRIFT**

(45) Veröffentlichungstag und Bekanntmachung des Hinweises auf die Patenterteilung:
**14.03.2018  Patentblatt 2018/11**

(51) Int Cl.:
***G01T 1/29*** *(2006.01)*

(21) Anmeldenummer: **15195453.4**

(22) Anmeldetag: **19.11.2015**

(54) **DETEKTORSYSTEM MIT STREIFENANODE**

DETECTOR SYSTEM WITH STRIP ANODE

SYSTÈME DÉTECTEUR DOTÉ D'ANODE À BANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.12.2014  DE 102014117682**

(43) Veröffentlichungstag der Anmeldung:
**08.06.2016  Patentblatt 2016/23**

(73) Patentinhaber: **Roentdek Handels GmbH**
**65779 Kelkheim-Ruppertshain (DE)**

(72) Erfinder:
• **CZASCH, Dr. Achim**
**65779 Kelkheim-Ruppertshain (DE)**
• **JAGUTZKI, Ottmar**
**65779 Kelkheim-Ruppertshain (DE)**

(74) Vertreter: **Blumbach · Zinngrebe Patent- und Rechtsanwälte**
**PartG mbB**
**Alexandrastraße 5**
**65187 Wiesbaden (DE)**

(56) Entgegenhaltungen:
• **EVAN DOWNIE ET AL: "Paper;Investigation of analog charge multiplexing schemes for SiPM based PET block detectors;Investigation of analog charge multiplexing schemes for SiPM based PET block detectors", PHYSICS IN MEDICINE AND BIOLOGY, INSTITUTE OF PHYSICS PUBLISHING, BRISTOL GB, Bd. 58, Nr. 11, 16. Mai 2013 (2013-05-16), Seiten 3943-3964, XP020245075, ISSN: 0031-9155, DOI: 10.1088/0031-9155/58/11/3943**

**Beschreibung**

Gebiet der Erfindung

Die Erfindung betrifft ein Detektorsystem zum zweidimensional ortsaufgelösten und im Nanosekundenbereich oder Subnanosekundenbereich zeitaufgelösten Nachweisen von Ladungswolken mit einer Streifenanode sowie eine solche Streifenanode. Die Erfindung betrifft insbesondere ein Detektorsystem zum schnellen Einzelteilchennachweis mit einem Sekundärelektronenvervielfacher, insbesondere mit Multihit-Fähigkeit.

Hintergrund der Erfindung

Derartige Detektoren zum schnellen Einzelteilchennachweis arbeiten häufig mit Delay-Line-Anoden. Solche Delay-Line-Anoden sind z.B. im US-Patent 6,661,013 und unter www.roentdek.de beschrieben. Delay-Line-Anoden ermitteln den Auftreffort der Ladungswolke anhand von Laufzeitmessungen mit Pikosekunden-Auflösung auf langen elektrischen Leitern, z.B. auf gewickelten Drähten.

Die der vorliegenden Anmeldung zugrundeliegende Anode ist im Gegensatz dazu eine ortsauflösende Streifenanode, bei welcher eine Vielzahl von nebeneinander liegenden Elektrodenstreifen zumindest teilweise separat ausgelesen werden und der Auftreffort der Ladungswolke anhand der Ladungsverteilung auf der Vielzahl der Elektrodenstreifen bestimmt wird (sog. Ladungswichtung).

Beispiele für ortsauflösende Anoden die nach dem Prinzip der Ladungswichtung arbeiten sind z.B. Wedge-und-Strip-Anoden oder Resistiv-Anoden. Diese sind jedoch zumeist langsam und im Nanosekundenbereich nicht multihitfähig.

Ein Beispiel für schnellere ortsauflösende Anoden die nach dem Prinzip der Ladungsteilung arbeiten sind Codacon-Anoden, bei denen Radius und Winkel getrennt voneinander kodiert sind. Es wird jedoch lediglich ein Bitmuster erzeugt, das den Ort kodiert. Daher werden sehr kleine Strukturen benötigt oder die Ortsauflösung ist relativ gering. Ferner ist die Eindeutigkeit der Zuordnung verbesserungswürdig. Codacon-Anoden sind z.B. in W.E. McClintock, C.A. Barth, R.E. Steele, G.M. Lawrence, J.G. Timothy, Appl. Opt. 21 (1982) 3071; G.M. Lawrence, W.E. McClintock, Proc. SPIE 2831 (1996) 104; und J.F. Pearson et al. , Nuclear Instruments and Methods in Physics Research A 513 (2003) 183-186 beschrieben.

Ein weiteres Beispiel sind Multi-Array-Matrix-Anoden, kurz MAMA-Anoden, welche unter anderem in Kameras in Satelliten eingesetzt werden. Bei den MAMA-Anoden wird mittels Streifenauslese der Ort in zwei Dimensionen bestimmt und es werden Kanäle mehrfach genutzt. Allerdings werden die Dimensionen getrennt voneinander ausgelesen. Die zweidimensionale Ortsbestimmung läuft demnach über voneinander unabhängige eindimensionale Bestimmungen ab. MAMA-Anoden sind z.B. in J.G. Timothy, G.H. Mount, Proc. SPIE 183 (1979) 169; J. Gethyn Timothy et al., Proc. SPIE 0172, Instrumentation in Astronomy III, 199 (May 3, 1979); und Bing Feng et al., Nuclear Instruments and Methods in Physics Research A 535 (2004) 546-549 beschrieben.

Ein für MAMA-Detektoren geeigneter Dekodier-Algorithmus zur Verbesserung der räumlichen Pixelauflösung ist z.B. in D.B. Kasle, J.S. Morgan, Proc. SPIE 1549, EUV, X-Ray, and Gamma-Ray Instrumentation for Astronomy II, 52 (October 1, 1991) dokumentiert. Der Dekodier-Algorithmus ist in einem CMOS-ASIC-Dekoder eingebunden und erfordert keine Modifikationen an dem Detektor.

Ferner offenbart die DE 10 2013 109 416 A1 einen Detektor zur zweidimensionalen Ortsbestimmung bei welcher die Nachweisoberfläche als z.B. in einer Schachbrett-Struktur angeordneten Nachweiselementen ausgebildet ist und Kanäle mehrfach genutzt werden.

Die Art der Ortsbestimmung bei Codacon-Anoden und MAMA-Anoden wird im Lichte der vorliegenden Erfindung als aufwändig und insbesondere hinsichtlich der Auflösung und Effizienz als nachteilig erachtet.

Allgemeine Beschreibung der Erfindung

Die Erfindung hat sich daher die Aufgabe gestellt, ein schnelles zeitauflösendes und zweidimensional ortsauflösendes Detektorsystem mit einer Streifenanode sowie eine Streifenanode bereit zu stellen, welche ein gutes Verhältnis aus Kosten- und Nachweiseffizienz sowie zweidimensionaler Ortsauflösung und falls gewünscht Multihitfähigkeit zu vereinen vermag.

Ein weiterer Aspekt der Aufgabe ist es, ein schnelles zeitauflösendes und zweidimensional ortsauflösendes Detektorsystem und eine zweidimensional ortsauflösende Anode bereit zu stellen, welche eine hohe Ortsauflösung und gute Multihitfähigkeit aufweisen, insbesondere hinsichtlich der Eindeutigkeit der Zuordnung bei Hits mit einem zeitlichen Abstand von kleiner als 20 ns und trotzdem möglichst wenig aufwändig sind.

Die Aufgabe der Erfindung wird durch den Gegenstand der unabhängigen Ansprüche gelöst. Vorteilhafte Weiterbildungen der Erfindung sind in den Unteransprüchen definiert.

Erfindungsgemäß wird ein Detektorsystem zum zweidimensional ortsaufgelösten und im Nanosekundenbereich oder Subnanosekundenbereich zeitaufgelösten Nachweisen von Ladungswolken bereit gestellt. Das Detektorsystem umfasst eine orts- und zeitauflösende Streifenanode zum Nachweisen von Ladungssignalen, welche durch die Ladungswolken induziert werden.

Die Streifenanode umfasst zumindest eine erste Streifenlage mit einer Vielzahl von zumindest teilweise separat auslesbaren ersten Elektrodenstreifen und eine zweite Streifenlage mit einer Vielzahl von zumindest teilweise separat auslesbaren zweiten Elektrodenstreifen. Die Richtungen der ersten und zweiten Elektrodenstreifen sind linear unabhängig voneinander, das heißt sie stehen in einem Winkel zueinander. Bei zwei Streifenlagen verlaufen die ersten und zweiten Elektrodenstreifen vorzugsweise senkrecht zueinander - bildlich gesprochen z.B. wie die Zinken von zwei unter 90° gekreuzten Kämmen - und spannen somit direkt die x- und y-Komponente eines kartesischen Koordinatensystems auf, welches die Nachweisebene repräsentiert. Für den Fachmann ist jedoch ersichtlich, dass die Elektrodenstreifen z.B. auch unter einem anderen Winkel zueinander verlaufen können. Letzteres ist insbesondere von Vorteil, wenn mehr als zwei Streifenlagen verwendet werden. Eine Weiterentwicklung kann z.B. eine Streifenanode mit drei Streifenlagen sein, deren Elektrodenstreifen in einem Winkel von jeweils 60° zueinander verlaufen, wobei die dritte Streifenlage redundante Information liefert.

Mit den zumindest zwei linear unabhängigen Streifenlagen kann somit die Ortsauflösung in zwei Raumdimensionen bewerkstelligt werden, indem der zweidimensionale Auftreffort der Ladungswolke, z.B. als x- und y-Koordinate, aus den Ladungssignalen der Elektrodenstreifen ermittelt wird.

Die Ortsauflösung wird bei einer Streifenanode durch Ladungsteilung bestimmt (im Gegensatz zur Laufzeitmessung bei einer Delay-Line-Anode). Es wird hierbei das Prinzip der Ladungswichtung verwendet, was bedeutet, dass die Ladungswolke bzw. das von der Ladungswolke induzierte Ladungssignal mehrere Elektrodenstreifen überdeckt, vorzugsweise mehr als zwei oder mehr als drei Elektrodenstreifen jeweils der ersten und zweiten Streifenlage, so dass in beiden Dimensionen eine Ladungsverteilung über die Elektrodenstreifen existiert und gemessen wird. Typischerweise wird der Auftreffort durch Schwerpunktsbildung der Ladungsverteilung berechnet. Dies hat mehrere Vorteile, unter anderem kann eine hohe Ortsauflösung aber auch ein hoher Grad an Redundanz in der Messung erzielt werden. Mit anderen Worten wird durch Ladungswichtung quer zu den ersten Elektrodenstreifen und quer zu den zweiten Elektrodenstreifen die zweidimensionale Ortsbestimmung in einer ersten Ortsdimension und in einer zweiten linear unabhängigen Ortsdimension jedes einzelnen durch die Ladungswolke induzierten Ladungssignals bewerkstelligt. Die beiden Richtungen der Ortauflösung der beiden Streifenlagen spannen somit die zweidimensionale Nachweisebene auf. Daher wird eine solche Streifenanode in der Fachwelt häufig als gekreuzte Streifenanode (engl. cross-strip-Anode oder XS-Anode) bezeichnet. Ein Beispiel des Prinzips einer gekreuzten Streifenanode ist in Nucl. Instrum. Methods Phys. Res. A, Feb. 10, 2009, 2009, 610(1) : 118-122 von O. Siegmund et al. beschrieben. Ferner ist eine Ausleseelektronik mit einer Vielzahl von ladungsmessenden elektronischen Verarbeitungskanälen umfasst, z.B. zumindest mit jeweils einem Verstärker und jeweils einem Analog-zu-Digital-Konverter (ADC). Die ersten und zweiten Elektrodenstreifen sind jeweils mit einem der ladungsmessenden elektronischen Verarbeitungskanäle verbunden, um die von den ersten und zweiten Elektrodenstreifen empfangenen Ladungssignale kanalweise zu verarbeiten, so dass die Ladungsverteilungen in den zwei Raumdimensionen bestimmt werden können.

Zumindest einige der ladungsmessenden elektronischen Verarbeitungskanäle sind nun jeweils mit mehreren der Elektrodenstreifen verbunden bzw. belegt, so dass die Anzahl der elektronischen ladungsmessenden Verarbeitungskanäle erheblich geringer ist als die Summe der Anzahl der ersten und zweiten Elektrodenstreifen.

Ein Aspekt der vorliegenden Erfindung ist nun, dass die Mehrfachbelegung der ladungsmessenden elektronischen Verarbeitungskanäle bezogen auf die erste und die zweite Streifenlage zumindest teilweise über Kreuz erfolgt, derart dass zumindest einige der ladungsmessenden elektronischen Verarbeitungskanäle gleichzeitig sowohl mit einem oder mehreren der ersten als auch mit einem oder mehreren der zweiten Elektrodenstreifen verbunden sind. Mit anderen Worten werden die ersten und zweiten Elektrodenstreifen der beiden Raumdimensionen in den elektronischen ladungsmessenden Verarbeitungskanälen vermischt ("über Kreuz zusammengeschaltet"), so dass die von den ladungsmessenden elektronischen Verarbeitungskanälen verarbeiteten Ladungssignale der ersten und zweiten Elektrodenstreifen zumindest teilweise über Kreuz überlagert sind, d.h. sowohl Ladungssignale von den ersten als auch von den zweiten Elektrodenstreifen erhalten und verarbeiten. Damit erzeugen die ladungsmessenden elektronischen Verarbeitungskanäle eine über Kreuz überlagerte scheinbare gemeinsame Ladungsverteilung der ersten und zweiten Elektrodenstreifen, so dass die Ortsinformation von beiden Raumdimensionen vermischt wird bzw. die ladungsmessenden elektronischen Verarbeitungskanäle zumindest teilweise, vorzugsweise sogar überwiegend Ortsinformation sowohl über die erste Raumdimension als auch über die zweite Raumdimension enthalten.

Ein Auswerterechner rekonstruiert anschließend aus der von den ladungsmessenden elektronischen Verarbeitungskanälen erzeugten scheinbaren Ladungsverteilung die wahre Ladungsverteilung der ersten und zweiten Elektrodenstreifen und bestimmt den zweidimensionalen Auftreffort und die Auftreffzeit der jeweils nachzuweisenden Ladungswolke bzw. der induzierten Ladungssignale anhand der rekonstruierten Ladungsverteilung.

Auf den ersten Blick mag es widersinnig erscheinen, nicht nur die Ladungssignale von mehreren parallelen Elektrodenstreifen auf denselben ladungsmessenden elektronischen Verarbeitungskanal zu geben, wodurch prinzipiell bereits Mehrdeutigkeiten entstehen können, sondern dies sogar noch über Kreuz zu tun, d.h. sogar noch die Ladungssignale der beiden Raumdimensionen miteinander zu vermischen.

Überraschenderweise hat sich jedoch herausgestellt, dass hierdurch trotz erheblicher Reduktion der Anzahl an ladungsmessenden elektronischen Verarbeitungskanälen, insbesondere der Verstärker und der ADCs, die in den Ladungssignalen enthaltene Information noch immer redundant genug ist, um eine eindeutige Zuordnung der Ladungssignale zu den einzelnen Elektrodenstreifen und damit den zweidimensionalen Ort zu rekonstruieren und dies im Nanosekundenbereich oder Subnanosekundenbereich zeitaufgelöst und falls gewünscht sogar im Multihitbetrieb. Es hat sich gezeigt, dass zwei oder mehr Hits in einer zeitlichen Abfolge von wenigen Nanosekunden, unter bestimmten Voraussetzungen sogar absolut gleichzeitig, noch orts- und zeitaufgelöst detektiert und eindeutig zugeordnet werden können. Gemäß der diesbezüglich gebräuchlichen Fachterminologie kann das Detektorsystem demnach als "multihit capable" (deutsch: Multihitfähig) mit einer Doppelpulsauflösung von im Mittel 20 ns oder weniger bezeichnet werden (vgl. www.atom.uni-frankfurt.de/research/surfaces/double_photo/).

Bei nahezu gleichzeitigen Hits mit einem zeitlichen Abstand von < 3 ns besteht zunächst das Problem, dass zwei x Positionen und zwei y-Positionen gemessen werden und es zunächst nicht ersichtlich ist, welcher x-Wert zu welchem y-Wert gehört. Diese Zuordnung kann hier allerdings unter anderem anhand der Messung der Ladungsmengen bzw. Signalhöhen wieder hergestellt werden, was z.B. gegenüber herkömmlichen Delay-Line-Konzepten von Vorteil ist.

Bei herkömmlichen Verfahren für die zweidimensionale Ortsauslese mit Hilfe von Streifenanoden werden die x- und die y-Positionen des nachgewiesenen Teilchens unabhängig voneinander ermittelt. Es werden demnach zwei unabhängige eindimensionale Messverfahren verwendet (z.B. bei MAMA-Detektoren). Dies entspricht der Kombination zweier getrennter Detektoren, die jeweils nur in x- und nur in y-Richtung sensitiv sind. Bei diesen herkömmlichen Streifenanoden werden zwar elektronische Kanäle eingespart, indem Streifen zusammengeschaltet werden. Durch geeignete Konfigurationen kann dennoch die Eindeutigkeit der Ortskodierung gewahrt werden.

Bei der vorliegenden Erfindung ist die Einsparung an elektronischen Kanälen nicht nur überproportional, sondern die Überproportionalität der Kanal-Einsparung kann noch stärker ausgenutzt werden. Somit können mit der Erfindung unter anderem Kosten- und Platzeinsparungen erzielt werden. Beispielsweise können mit Hilfe einer MAMA-Verschaltung mit n elektronischen Kanälen etwa $n^2/16$ Positionen eindeutig kodiert werden. Z.B. würden für einen zweidimensional ortsauflösenden Detektor mit 48 Streifen pro Dimension demnach insgesamt etwa 2 x 28 = 56 elektronische Kanäle benötigt werden.

Wenn bei der vorliegenden Erfindung die Überbelegung der elektronischen Verarbeitungskanäle zwischen der ersten und zweiten Streifenlage vermischt wird, dann können alle Elektrodenstreifen hingegen z.B. mit lediglich etwa 39 elektronischen Verarbeitungskanälen ausgelesen werden.

Beim herkömmlichen MAMA-Design ist der Ort in einer Dimension bereits durch nur zwei direkt benachbarte Streifenkombinationen eindeutig kodiert. Die Einsparung an elektronischen Kanälen verläuft deshalb "nur" quadratisch.

Vorzugsweise wird bei der vorliegenden Erfindung die Ladungswolke bzw. das von der Ladungswolke induzierte Ladungssignal so eingestellt, dass mehr als zwei Elektrodenstreifen, vorzugsweise mehr als drei Elektrodenstreifen, überdeckt werden. Wenn demnach die von der Ladungswolke induzierten Ladungssignale auf mehr als zwei bzw. mehr als drei Elektrodenstreifen ausgedehnt sind und die Elektrodenstreifen derart miteinander über Kreuz verschaltet sind, dass die Eindeutigkeit der Ortsbestimmung erst durch eine Kombination von mehr als zwei benachbarten Streifen gewährleistet wird, dann kann eine eindeutige Kodierung des Orts mit erheblich weniger elektronischen Verarbeitungskanälen gelingen. Die mögliche zusätzliche Einsparung ist demnach durch die Vermischung der Streifenlagen noch größer. In einem Beispiel mit 2 x 48 = 96 Elektrodenstreifen reichen sogar 23 elektronische Verarbeitungskanäle (anstelle von 56 bei einer herkömmlichen MAMA-Konfigurationen) aus, um alle 2 x 48 = 96 Elektrodenstreifen eindeutig zu kodieren.

Das vorliegende Detektorsystem und die vorliegende gekreuzte Streifenanode haben daher den Vorteil, dass man durch die über Kreuz erfolgte Mehrfachbelegung bzw. Vermischung der Raumdimensionen nicht nur überproportional gewinnt, sondern diese Überproportionalität wird auch noch stärker ausgenutzt. D.h. für jeden weiteren elektronischen Verarbeitungskanal gewinnt man noch stärker überproportional mehr Elektrodenstreifen. Daher ist es von besonderem Vorteil, wenn man die beiden Raumdimensionen wie bei einem kombinierten großen "Streifenkamm" - der miteinander vermischt beide Raumdimensionen abdeckt - verschaltet, gegenüber einem System, das beide Raumdimensionen getrennt, jeweils als zwei voneinander unabhängige eindimensionale Messungen abdeckt.

Zur Rekonstruktion kann in einem einfachen Fall z.B. eine Kenngröße S definiert werden, wobei die Kenngröße S ein Maß für die Glattheit der Ladungsverteilung über die Elektrodenstreifen repräsentiert, wobei $S=f(L_i)$ als Funktion $f(L_i)$ der von den ladungsmessenden elektronischen Verarbeitungskanälen gemessenen Ladungssignale $L_i$ der ersten und zweiten Elektrodenstreifen berechnet wird. Der Index i läuft dabei über alle ersten und zweiten Elektrodenstreifen. Die Kenngröße S als Maß für die Glattheit wird dann minimiert, um aus der scheinbaren Ladungsverteilung die wahre Ladungsverteilung zu rekonstruieren.

Vorzugsweise wird die Kenngröße S minimiert, indem die Ladungsverteilung der Ladungssignale $L_i$ der

ersten und/oder zweiten (und/oder ggf. weiteren) Elektrodenstreifen in insbesondere kleinen Schritten variiert wird, wobei während der Variation der Ladungsverteilung die Ladungsmengen in zumindest einem der, vorzugsweise in den bzw. allen, ladungsmessenden elektronischen Verarbeitungskanälen jeweils auf dem gemessenen Wert festgehalten wird. Mit anderen Worten wird bei der Rekonstruktion die Ladungsmenge jeweils nur innerhalb der zu Gruppen zusammengeschalteten Elektrodenstreifen variiert. Alternativ zur Minimierung der Kenngröße S kann auch ein neuronales Netzwerk trainiert werden oder es kann eine ausreichend große Zuordnungstabelle verwendet werden.

Vorzugsweise enthält die Funktion f($L_1$) eine Summierung über die Differenzen der gemessenen Ladungssignale zwischen jeweils benachbarten Elektrodenstreifen.

Insbesondere wird die Kenngröße S als Maß für die Glattheit $S$=f($L_i$) als Funktion

$$ S = \sum_{i=2}^{N-1} (L_i - L_{i-1} + L_i - L_{i+1})^2 $$

berechnet, wobei $i$ der laufende Index für die ersten und zweiten Elektrodenstreifen, $L_i$ der Wert des gemessenen Ladungssignals mit dem zugehörigen Index, und $N$ die Gesamtzahl der ersten und zweiten Elektrodenstreifen sind. Diese Art der Rekonstruktion hat sich als zuverlässig erwiesen. Wenn es beispielsweise 48 Elektrodenstreifen in x-Richtung und 48 Elektrodenstreifen in y-Richtung gibt, ist N = 96. Um eine gute Ortsauflösung zu erreichen sollte die erste Streifenlage vorzugsweise zumindest 10 zumindest teilweise separat voneinander auslesbare erste Elektrodenstreifen und die zweite Streifenlage zumindest 10 zumindest teilweise separat voneinander auslesbare zweite Elektrodenstreifen umfassen.

Vorzugsweise ist ein zweidimensional ortsauflösender Sekundärelektronenvervielfacher umfasst, z.B. eine Mikrokanalplatte (engl. Micro-channel plate MCP). Ein MCP erzeugt aus einzelnen zu detektierenden atomaren oder molekularen Teilchen oder Photonen eine lokalisierte Elektronenwolke, die das Ladungssignal auf der Streifenanode induziert. D.h. es handelt sich um einen orts- und zeitauflösenden Einzelteilchendetektor. Die von dem MCP lokal erzeugte Elektronenwolke kann direkt auf der Streifenanode auftreffen, dann wird zur Ladungswichtung für eine Aufweitung der Elektronenwolke gesorgt oder die Elektronenwolke trifft nicht unmittelbar auf die Elektrodenstreifen, sondern die Ladungssignale werden mittels einer resistiven Schicht als Bildladung auf den Elektrodenstreifen induziert. Das ggf. verwendete Prinzip der Bildladungsauskopplung ist z.B. in der DE 44 29 925 C1 beschrieben. Jeder ladungsmessende elektronische Verarbeitungskanal umfasst insbesondere jeweils einen Analog-Digital-Wandler, um die Höhe der Ladungssignale auf den Elektrodenstreifen zu digitalisieren.

Bevorzugt werden Transientenrekorder - die manchmal auch als (schnelle) Waveform Digitizer bezeichnet werden - als Analog-Digital-Wandler verwendet. Transientenrekorder digitalisieren den zeitlichen Signalverlauf des jeweiligen Ladungssignals. Die Transientenrekorder sollten für das vorliegende Detektorsystem eine Samplingrate von mindestens 10 Megasamples/s, besser mindestens 100 Megasamples/s, ggf. sogar mindestens 250 Megasamples/s aufweisen. Mit den Transientenrekordern kann nicht nur die Ladungsverteilung, sondern sogar der genaue zeitliche Ladungsverlauf jedes Elektrodenstreifens aufgezeichnet werden.

Vorzugsweise umfasst jeder Ladungsmessende elektronische Verarbeitungskanal jeweils einen Verstärker, so dass die Ladungssignale der Elektrodenstreifen zunächst von dem zugehörigen Verstärker verstärkt und die verstärkten Ladungssignale anschließend von dem zugehörigen Analog-Digital-Wandler digitalisiert werden. Dies ist z.B. bei der Verwendung von MCPs vorteilhaft, um ausreichende Signalhöhen für die ADCs zu generieren.

In einem einfachen Beispiel sind die ersten und zweiten Elektrodenstreifen als schmale lange rechteckige Streifen ausgebildet. Es ist jedoch vorteilhaft die ersten und zweiten Elektrodenstreifen jeweils als lineare Aneinanderreihung von mittels Verbindungsleitungsabschnitten miteinander verbundenen flächigen Antennenelementen auszubilden. Dabei ist die Fläche der Antennenelemente erheblich größer als die der Verbindungsleitungsabschnitte. Die flächigen Antennenelemente der ersten und zweiten Streifenlage sind z.B. rautenförmig und schachbrettartig in einer Ebene miteinander verschränkt. Die Verbindungsleitungsabschnitte der ersten und zweiten Streifenlage, die die flächigen Antennenelemente zu den Elektrodenstreifen verbinden überkreuzen sich sind dann elektrisch isolierend. Dies hat den Vorteil, dass beide Streifenlagen die gleiche Ladungsmenge erhalten und sich in einer Ebene befinden können.

Gemäß einem besonderen Ausführungsbeispiel ist zumindest noch eine dritte Streifenlage mit einer Vielzahl von zumindest teilweise separat auslesbaren dritten Elektrodenstreifen umfasst und die ersten, zweiten und dritten Elektrodenstreifen verlaufen alle zueinander unter einem Winkel, bei drei Streifenlagen vorzugsweise unter einem Winkel von jeweils 60° zueinander. Hierdurch können in vorteilhafter Weise die Rekonstruktion der wahren Ladungsverteilung und die Multihitfähigkeit verbessert werden.

Vorzugsweise sind bei diesem Ausführungsbeispiel zumindest einige der ladungsmessenden elektronischen Verarbeitungskanäle gleichzeitig jeweils mit zumindest einem der ersten Elektrodenstreifen und mit zumindest einem der zweiten Elektrodenstreifen und mit zumindest einem der dritten Elektrodenstreifen belegt. Mit anderen Worten erfolgt eine Belegung der ladungsmessenden elektronischen Verarbeitungskanäle über Kreuz über alle drei zueinander nicht parallelen Streifenlagen.

Gemäß einem Ausführungsbeispiel können die dritten Elektrodenstreifen eine andere Breite aufweisen als die ersten und/oder zweiten Elektrodenstreifen. Insbesondere sind die dritten Elektrodenstreifen breiter und/oder von der Anzahl her weniger als die ersten und zweiten Elektrodenstreifen. Hierdurch kann die zweidimensionale Ortmessung vor allem mit den ersten und zweiten Elektrodenstreifen durchgeführt werden und die dritten Elektrodenstreifen dienen vor allem der Redundanz zur Verbesserung der Multihitfähigkeit.

Vorzugsweise sind jeweils mehrere der ersten Elektrodenstreifen und jeweils mehrere der zweiten Elektrodenstreifen und gegebenenfalls jeweils mehrere der dritten Elektrodenstreifen über Kreuz zu Gruppen zusammengeschaltet, so dass zumindest einige der ladungsmessenden elektronischen Verarbeitungskanäle mit jeweils einer Gruppe aus den mehreren der ersten Elektrodenstreifen und den mehreren der zweiten Elektrodenstreifen und ggf. den mehreren der dritten Elektrodenstreifen verbunden sind. In vorteilhafter Weise kann so die Anzahl der ladungsmessenden elektronischen Verarbeitungskanäle besonders gering gehalten werden.

Vorzugsweise sind die über Kreuz verbundenen ersten und zweiten und ggf. dritten Elektrodenstreifen bereits direkt auf der Streifenanode fest miteinander verbunden. Hierdurch werden der Verkabelungsaufwand und die Gefahr einer Falschverkabelung durch den Benutzer verringert. In vorteilhafter Weise kann die elektrische Verbindung bereits fabrikseitig auf dem Substrat der Streifenanode vorgesehen werden.

Demnach betrifft die vorliegende Erfindung auch eine gekreuzte Streifenanode zum zweidimensional ortsaufgelösten und im Nanosekundenbereich oder Subnanosekundenbereich zeitaufgelösten Nachweisen von Ladungssignalen, welche von Ladungswolken, z.B. aus einem MCP, induziert werden. Die gekreuzte Streifenanode umfasst zumindest eine erste Streifenlage mit einer Vielzahl von auslesbaren ersten Elektrodenstreifen und eine zweite Streifenlage mit einer Vielzahl von auslesbaren zweiten Elektrodenstreifen, wobei die Richtungen der ersten und zweiten Elektrodenstreifen linear unabhängig voneinander sind, mit anderen Worten zumindest zwei gekreuzte Streifenlagen, um die Ortsauflösung in zwei Raumdimensionen zu bewerkstelligen.

Die Elektrodenstreifen sind bezogen auf die erste und zweite Streifenlage über Kreuz zu Gruppen zusammengeschaltet, und zwar bereits fest auf der Streifenanode. Die Zusammenschaltung zu Gruppen über Kreuz ist also dergestalt, dass zumindest in einigen der Gruppen sowohl mehrere erste Elektrodenstreifen als auch mehrere zweite Elektrodenstreifen miteinander verbunden sind und jede der Gruppen von über Kreuz zusammengeschalteten Elektrodenstreifen jeweils mit einem ladungsmessenden elektronischen Verarbeitungskanal verbindbar ist, um die von den Ladungswolken induzierten Ladungssignale der bezogen auf die erste und zweite Streifenlage über Kreuz zusammengeschalteten Gruppen kanalweise zu verarbeiten.

Vorzugsweise ist zumindest noch eine dritte Streifenlage mit einer Vielzahl von auslesbaren dritten Elektrodenstreifen umfasst, und die ersten, zweiten und dritten Elektrodenstreifen verlaufen jeweils alle zueinander unter einem Winkel, insbesondere jeweils unter einem Winkel von 60° zueinander. Die Elektrodenstreifen sind dabei bereits auf der Streifenanode bezogen auf die erste, zweite und dritte Streifenlage über Kreuz zu Gruppen zusammengeschaltet, dergestalt dass zumindest in einigen der Gruppen sowohl erste Elektrodenstreifen als auch zweite Elektrodenstreifen als auch dritte Elektrodenstreifen miteinander verbunden sind und jede der Gruppen von über Kreuz zusammengeschalteten Elektrodenstreifen jeweils mit einem ladungsmessenden elektronischen Verarbeitungskanal verbindbar ist, um die von den Ladungswolken induzierten Ladungssignale der bezogen auf die erste, zweite und dritte Streifenlage über Kreuz zusammengeschalteten Gruppen kanalweise zu verarbeiten.

Im Folgenden wird die Erfindung anhand von Ausführungsbeispielen und unter Bezugnahme auf die Figuren näher erläutert, wobei gleiche und ähnliche Elemente teilweise mit gleichen Bezugszeichen versehen sind und die Merkmale der verschiedenen Ausführungsbeispiele miteinander kombiniert werden können.

<u>Kurzbeschreibung der Figuren</u>

Es zeigen:

Fig. 1      eine schematische teilweise geschnittene Explosionsdarstellung eines ersten Ausführungsbeispiels einer gekreuzten Streifenanode mit einem MCP-Stack,

Fig. 2      eine schematische teilweise geschnittene Explosionsdarstellung eines zweiten Ausführungsbeispiels einer gekreuzten Streifenanode mit einem MCP-Stack,

Fig. 3      eine stark vereinfachte schematische Blockdarstellung der Zusammenschaltung der Elektrodenstreifen und der kanalweisen Verarbeitung der Ladungssignale der zusammengeschalteten Elektrodenstreifen,

Fig. 4      eine schematische Darstellung eines Ausführungsbeispiels einer gekreuzten Streifenanode mit 48 Elektrodenstreifen in x-Richtung und 48 Elektrodenstreifen in y-Richtung in der Bauart gemäß Fig. 2,

Fig. 5      wie Fig. 4 mit schematisch dargestellter Elektronenwolke, welche zur Ladungswichtung mehrere der Elektrodenstreifen in x-Richtung und mehrere der Elektrodenstreifen in y-Richtung überdeckt,

Fig. 6      eine Darstellung der wahren Ladungsverteilung der in Fig. 5 dargestellten Elektronenwolke,

Fig. 7      eine Darstellung der scheinbaren Ladungsverteilung bei der in Fig. 5 dargestellten über Kreuz Zusammenschaltung von Elektrodenstreifen in x-Richtung und Elektrodenstreifen in y-Richtung,

Fig. 8 eine Darstellung der aus der scheinbaren Ladungsverteilung in Fig. 7 rekonstruierten Ladungsverteilung,

Fig. 9 eine schematische teilweise geschnittene Explosionsdarstellung eines weiteren Ausführungsbeispiels einer gekreuzten Streifenanode mit drei Streifenlagen.

Detaillierte Beschreibung der Erfindung

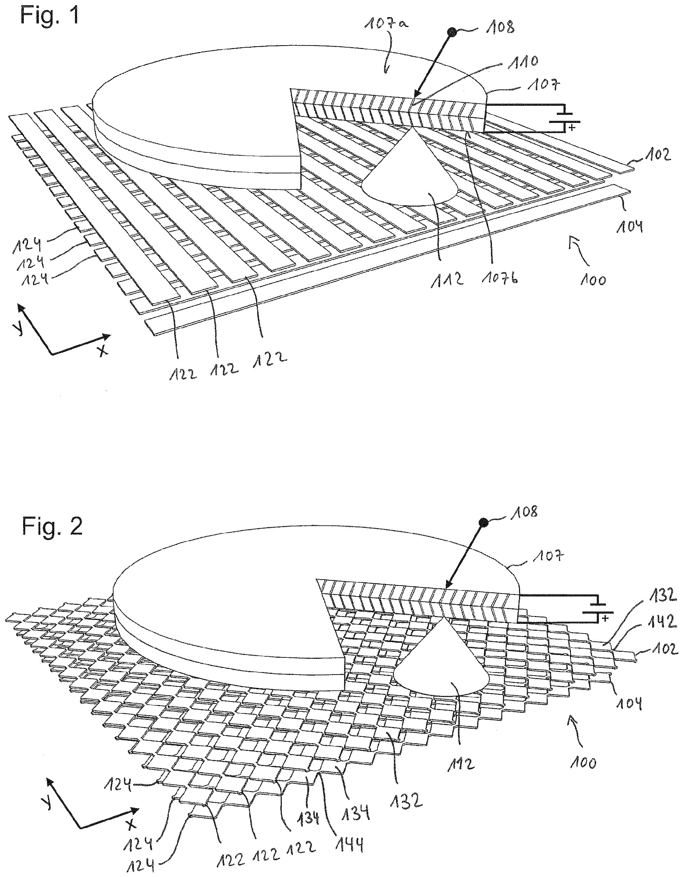

Fig. 1 zeigt eine schematische Explosionsdarstellung eines ersten Ausführungsbeispiels einer gekreuzten Streifenanode 100 mit einer ersten Streifenlage 102 und einer zur ersten Streifenlage 102 gekreuzten zweiten Streifenlage 104. Es ist für den Fachmann ersichtlich, dass die jeweilige Ortsauflösung der ersten und zweiten Streifenlage 102, 104 jeweils senkrecht zum Verlauf der ersten bzw. zweiten Elektrodenstreifen 122, 124 bewerkstelligt wird. Somit wird mit der ersten Streifenlage 102 die Ortsauflösung in x-Richtung und mit der zweiten Streifenlage 104 die Ortsauflösung in der y-Richtung erzielt. In diesem Beispiel sind die erste und zweite Streiflage 102, 104 unter einem Winkel von 90° gekreuzt, sodass bei der Auslese direkt die x- und y-Koordinaten eines kartesischen Koordinatensystems erhalten werden.

Der Streifenanode 100 vorgeschaltet ist ein MCP-Stack 107, hier beispielhaft in Chevron-Anordnung bestehend aus zwei MCPs. Trifft ein einfallendes Teilchen 108, zum Beispiel ein atomares oder molekulares Teilchen oder ein Photon, auf die Vorderseite 107a des MCP-Stacks 107 wird innerhalb eines oder einiger weniger lokalisierter MCP-Kanäle 110 eine lokale Sekundärelektronenvervielfachung bewirkt, so dass aus der der Streifenanode 100 zugewandten Rückseite 107b des MCP-Stacks 107 eine Ladungswolke in Form einer Elektronenwolke 112 emittiert wird. Zwischen der Vorderseite 107a und der Rückseite 107b ist hierfür eine Spannung von typischerweise etwa 2kV bis 3kV angelegt. Die Elektronenwolke 112 wird durch ein geeignetes elektrisches Feld zwischen dem MCP-Stack 107 und der Streifenanode 100 aufgeweitet, so dass die Elektronenwolke 112 mehrere der parallelen ersten Elektrodenstreifen 122 der ersten Streifenlage 102 und mehrere der parallelen zweiten Elektrodenstreifen 124 der zweiten Streifenlage 104 überdeckt damit eine Ladungswichtung vorgenommen werden kann.

In diesem Beispiel trifft die Elektronenwolke 112 unmittelbar auf die ersten und zweiten Elektrodenstreifen 122, 124. Für den Fachmann ist jedoch ersichtlich, dass auch das Prinzip der Bildladungsauskopplung, wie es in der DE 44 29 925 C1 beschrieben ist, verwendet werden kann, um eine Ladungswichtung zu ermöglichen.

Gemäß dem allgemeinem Konzept einer Streifenanode wird die Größe der Ladungsanteile auf jedem der ersten und jedem der zweiten Elektrodenstreifen 122, 124 separat bestimmt. Hieraus wird dann die Ladungsverteilung auf der ersten und zweiten Streifenlage 102, 104 in den beiden Raumdimensionen ermittelt, um in Ansprechen auf die Ladungsverteilung auf der ersten und zweiten Streifenlage 102, 104 den Auftreffort der Elektronenwolke 112 auf der Streifenanode 100 in x- und y-Richtung zu berechnen. Durch Schwerpunktsbestimmung der Ladungsverteilung ist die Ortsauflösung der jeweiligen Streifenlagen 102, 104 erheblich besser, als der Gitterabstand der jeweiligen Elektrodenstreifen 122, 124 und somit erheblich besser, als bei einer rein digitalen Auslese der Elektrodenstreifen 122, 124. Ferner enthalten die Ladungsverteilungen redundante Information, die zur Herstellung einer eindeutigen Zuordnung, z.B. bei Multihits verwendet werden kann.

Bezug nehmend auf Fig. 2 ist eine alternative Gestaltung der Elektrodenstreifen 122, 124 dargestellt. Die Elektrodenstreifen 122, 124 bestehen aus rautenförmigen, in diesem Beispiel quadratischen, flächigen Antennenelementen 132, 134, welche jeweils durch schmale Verbindungsleitungsabschnitte 142, 144 zu den Elektrodenstreifen 122, 124 verbunden sind. Der Vorteil bei dieser Ausgestaltung der Elektrodenstreifen 122, 124 ist, dass die rautenförmigen flächigen Antennenelemente 132 für die Ortsauflösung in x-Richtung und die rautenförmigen Antennenelemente 134 für die Ortsauflösung in y-Richtung in ein und derselben Ebene schachbrettartig miteinander verschränkt sein können. Lediglich die Verbindungsleitungsabschnitte 142, 144 überkreuzen sich an den jeweiligen Eckpunkten der rautenförmigen Antennenelemente 132, 134. Die sich überkreuzenden Verbindungsleitungsabschnitte 142, 144 sind durch eine isolierende Zwischenschicht an den Kreuzungspunkten elektrisch voneinander isoliert.

Die Elektrodenstreifen 122, 124 umfassen demnach vorzugsweise eine Aneinanderreihung von Rauten oder Quadraten 132, 134, wodurch die Anodenfläche optimal belegt werden kann.

Bislang wurde bei solchen gekreuzten Streifenanoden 100 typischerweise jeder der ersten Elektrodenstreifen 122 und jeder der zweiten Elektrodenstreifen 124 einzeln ausgelesen. Hierzu benötigte man demnach eine Anzahl von elektronischen Verarbeitungskanälen, die der Summe der Anzahl von ersten und zweiten Elektrodenstreifen 122, 124 entsprechen.

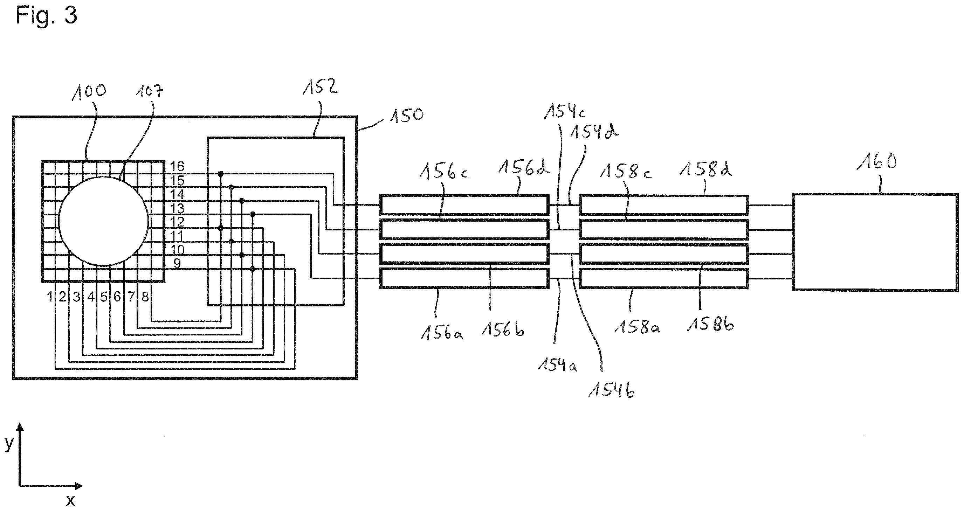

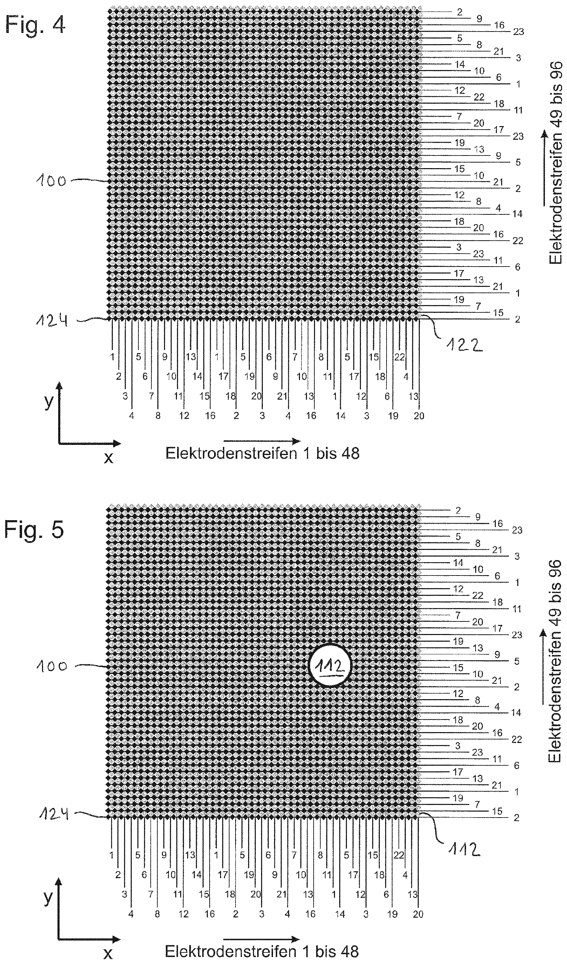

Bezug nehmend auf die Fig. 3 wird nachfolgend das Konzept der über Kreuz Zusammenschaltung der ersten und zweiten Elektrodenstreifen 122, 124 näher erläutert. Fig. 3 symbolisiert vereinfachend acht erste Elektrodenstreifen 122 ortsauflösend in x-Richtung, welche mit 1-8 nummeriert sind und acht zweite Elektrodenstreifen 124 ortsauflösend in y-Richtung, welche mit 9-16 nummeriert sind. Vorgreifend auf die Fig. 4 und 5 ist dem Fachmann ersichtlich, dass bei einer realen Streifenanode 100 vorzugsweise erheblich mehr als 8 + 8 = 16 erste bzw. zweite Elektrodenstreifen 122, 124 verwendet werden. Der zeit- und zweidimensional ortsauflösende Einzelteilchen-Detektor umfassend das MCP-Stack 107 und die Streifenanode 100 befindet sich in einer Vakuumkammer 150. Das Blockschaltbild 152 symbolisiert die Zusammenschaltung der ersten Elektrodenstreifen mit den Nummern 1-8 über Kreuz mit den zweiten Elektrodenstreifen mit den Nummern 9-16. Wie anhand des Schaltungsschemas in dem Blockschaltbild 152 zu erkennen ist, sind die Elektrodenstreifen mit folgenden Nummern miteinander verbunden:

1 und 5 und 9 und 13
2 und 6 und 10 und 14
3 und 7 und 11 und 15
4 und 8 und 12 und 16.

Es sind also Elektrodenstreifen innerhalb der jeweiligen Raumdimension miteinander zusammengeschaltet, zum Beispiel die Nummern 1 und 5. Allerdings sind auch Elektrodenstreifen zwischen der ersten und zweiten Streifenlage 102, 104, d.h. zwischen den beiden Raumdimensionen über Kreuz zusammengeschaltet, zum Beispiel die Nummer 1 (x-Richtung) mit den Nummern 9 und 13 (y-Richtung). Aufgrund dieser kombinierten Zusammenschaltung aus Elektrodenstreifen innerhalb einer Streifenlage und über Kreuz mit der jeweils anderen linear unabhängigen Streifenlage kann die Anzahl der elektronischen Verarbeitungskanäle in besonderem Maße reduziert werden, im vorliegend vereinfachten Beispiel von sechzehn auf vier elektronische Verarbeitungskanäle, welche mit 154a-d bezeichnet sind. Jeder elektronische Verarbeitungskanal 154a-d umfasst einen ladungssensitiven Verstärker 156a-d und einen ADC 158a-d, in diesem Beispiel in Form jeweils eines Transientenrekorders 158a-d. Derartige Verstärker sind z.B. von der Fa. RoentDek Handels GmbH unter der Bezeichnung FAMP8 (vgl. www.roentdek.com) und derartige Mehrkanal-Transientenrekorder sind z.B. von der Fa. Cronologic GmbH & Co. KG unter der Bezeichnung NDigo5G (vgl. www.cronologic.de) erhältlich. Die von den Transientenrekordern 158a-d digitalisierten Ladungssignale werden von einem Computer 160 verarbeitet, um die Ladungsverteilungen auf den beiden Streifenlagen 102, 104 zu rekonstruieren und in Ansprechen auf die erste und zweite Ladungsverteilung den zweidimensionalen Auftreffort der Elektronenwolke 112 auf der Streifenanode 100 zu berechnen.

Im Allgemeinen bedeutet dies, dass bei einer zweidimensionalen Ortsauslese mit einer gekreuzten Streifenanode 100 zumindest einer der elektronischen Verarbeitungskanäle 154 bzw. zumindest einer der ADCs 158 dahingehend überbelegt ist, dass der zumindest eine überbelegte elektronische Verarbeitungskanal 154 bzw. der zumindest eine überbelegte ADC 158 mit zumindest einem ersten Elektrodenstreifen 122 der die Ortsauflösung in x-Richtung bewerkstelligt und zumindest einem Elektrodenstreifen 124, der die Ortsauflösung der y-Richtung bewerkstelligt, verbunden ist.

Die Zusammenschaltung der ersten und zweiten Elektrodenstreifen 122, 124 innerhalb des Blockschaltbildes 152 ist symbolisch zu verstehen, da die Verschaltung vorzugsweise unmittelbar auf der gekreuzten Streifenanode 100 selbst, z.B. an deren Rand und/oder auf deren Rückseite, vorgenommen wird. Dadurch werden Vakuumdurchführungen eingespart. Es ist aber grundsätzlich auch möglich, die Zusammenschaltung nach den Verstärkern 156 und unmittelbar vor den ADCs 158 vorzunehmen. Jedenfalls sollte die über Kreuz Zusammenschaltung der ersten und zweiten Elektrodenstreifen vor den ADCs 158 erfolgen, da diese relativ teuer sind.

In den Fig. 4 und 5 ist eine gekreuzte Streifenanode 100 mit einer beispielhaften Anzahl von 48 ersten Elektrodenstreifen 122 ortsauflösend in x-Richtung und 48 zweiten Elektrodenstreifen ortsauflösend in y-Richtung gemäß dem Rautenkonzept der Fig. 2 dargestellt. In Fig. 5 ist erkennbar, dass die Elektronenwolke 112 beziehungsweise das von der Elektronenwolke 112 induzierte Ladungssignal eine Mehrzahl von ersten und zweiten Elektrodenstreifen ortsauflösend in x-Richtung 122 und in y-Richtung 124 überdeckt, um eine gute Ladungswichtung vornehmen zu können. In diesem Beispiel überdeckt die Elektronenwolke 112 jeweils etwa sieben bis acht Elektrodenstreifen 122, 124 der beiden Raumdimensionen x und y. Allgemein werden vorzugsweise jeweils mehr als zwei oder mehr als drei der ersten und der zweiten Elektrodenstreifen 122, 124 überdeckt.

Demnach sind in dieser Konfiguration der gekreuzten Streifenanode 48 + 48 = 96 erste und zweite Elektrodenstreifen 122, 124 zueinander gekreuzt angeordnet, um in diesem Beispiel eine Fläche von 96 mm x 96 mm abzudecken. Die Elektrodenstreifen 122, 124 haben demnach in diesem Beispiel eine Breite von etwa 2 mm. Durch die schachbrettartige Verschränkung der rautenförmigen Antennenelemente 132, 134 wird eine maximale Ausnutzung der Nachweisoberfläche der Streifenanode 100 erreicht. Die grau dargestellten ersten Elektrodenstreifen 122 erstrecken sich in y-Richtung und bewerkstelligen die Ortsauflösung in x-Richtung und die schwarz dargestellten zweiten Elektrodenstreifen 124 erstrecken sich in x-Richtung und bewerkstelligen die Ortsauflösung in y-Richtung. Jeder der ersten und zweiten Elektrodenstreifen 122, 124 ist jeweils mit einem elektronischen Verarbeitungskanal 154 und somit mit einem ADC bzw. Transientenrekorder 158 verbunden. Allerdings sind die elektronischen Verarbeitungskanäle 154 und damit die ADCs bzw. Transientenrekorder 158 mehrfach überbelegt, indem jedem der ADCs bzw. Transientenrekorder 158 mehrere der Elektrodenstreifen 122 für die Ortsauflösung in x-Richtung und mehrere der Elektrodenstreifen 124 für die Ortsauflösung in der y-Richtung zugeordnet sind. In diesem Beispiel werden 23 elektronische Verarbeitungskanäle 154 für die insgesamt 96 ersten und zweiten Elektrodenstreifen 122, 124 verwendet.

In den Fig. 4 und 5 ist die Zuordnung der 48 ersten Elektrodenstreifen 122 und der 48 zweiten Elektrodenstreifen 124 zu den 23 elektronischen Verarbeitungskanälen 154 mit den Ziffern 1 bis 23 bezeichnet.

Bezug nehmend auf die in Fig. 5 dargestellte Elektronenwolke 112 ist demnach zu erwarten, dass die elektronischen Verarbeitungskanäle beziehungsweise die ADCs mit den Nummern 8, 11, 1 und 10, 15, 5 eine hohe Ladung messen werden, da diese mit den ersten bzw. zweiten Elektrodenstreifen verbunden sind, welche sich im Zentrum der Ladungsverteilung der Elektronenwolke 112 kreuzen.

Die in Fig. 4 und 5 dargestellte überkreuzte Zusammenschaltung der Elektrodenstreifen 122, 124 beziehungsweise deren über Kreuz Zuordnung zu den 23 elektronischen Verarbeitungskanälen 154 wurde mit einem Computerprogramm berechnet. Dabei wurden die folgenden Regeln angewendet, um trotz der erheblichen Kanalüberbelegung eine eindeutige Positionsbestimmung, insbesondere auch im Multihitbetrieb, zu gewährleisten. Die 23 elektronischen Verarbeitungskanäle 154 sind so verteilt, dass der Abstand zwischen zwei Elektrodenstreifen, die demselben elektronischen Verarbeitungskanal 154 zugeordnet sind, an keiner Stelle kleiner ist als ein vordefinierter Minimumabstand. Der Minimumabstand beträgt in diesem Beispiel 15 Elektrodenstreifen. Allgemein sollte dieser Minimumabstand zwischen zwei Elektrodenstreifen die demselben elektronischen Verarbeitungskanal 154 zugeordnet sind, an keiner Stelle kleiner als zwei, vorzugsweise an keiner Stelle kleiner als drei, oder im Mittel nicht kleiner als fünf sein.

Zusätzlich wurde in diesem Beispiel gefordert, dass sich zwei beliebige Folgen von zwölf direkt benachbarten Elektrodenstreifen maximal an zwei Positionen gleichen dürfen (d.h. dort den gleichen elektronischen Verarbeitungskanal 154 belegen, wobei dies auch für das Spiegelbild einer Folge gilt = "maximale Folgengröße"). Vorzugsweise sollte der Mindestabstand zwischen zwei Elektrodenstreifen, die demselben elektronischen Verarbeitungskanal 154 zugeordnet sind, nicht kleiner als die Elektronenwolke bzw. deren induziertes Ladungssignal sein. Allerdings würde die Positionsbestimmung auch noch funktionieren, wenn diese Regel an einigen, vorzugsweise wenigen Stellen verletzt wäre.

Die vorstehend beschriebenen Regeln zur Kanalüberbelegung sind relativ strikt gewählt, um noch eine gute Multihitfähigkeit zu gewährleisten. Insbesondere wenn keine Multihitfähigkeit verlangt wird, kann die Anzahl der elektronischen Verarbeitungskanäle 154 sogar noch weiter reduziert werden oder es können noch größere gekreuzte Streifenanoden 100 mit mehr Elektrodenstreifen 122, 124 abgedeckt werden.

In dem vorliegenden Beispiel sind drei der ersten Elektrodenstreifen 122 ortsauflösend in x-Richtung und zwei der Elektrodenstreifen 124 ortsauflösend in y-Richtung zu einer Gruppe Nummer 1 zusammengeschaltet, wobei diese Gruppe Nummer 1 mit dem elektronischen Verarbeitungskanal Nummer 1 verbunden ist. Als nächstes sind zwei Elektrodenstreifen 122 ortsauflösend in x-Richtung und drei Elektrodenstreifen 124 ortsauflösend in y-Richtung zu einer Gruppe Nummer 2 zusammengeschaltet, wobei die Gruppe Nummer 2 mit dem elektronischen Verarbeitungskanal mit der Nummer 2 verbunden ist, usw.. Mit anderen Worten sind die Elektrodenstreifen 122, die die Ortsauflösung in x-Richtung bewerkstelligen und die Elektrodenstreifen 124, die die Ortsauflösung in der y-Richtung bewerkstelligen in diesem Beispiel zu den mit den Nummern 1-23 versehenen Gruppen zusammengeschaltet, wobei dann jede der Gruppen 1-23 mit dem entsprechenden elektronischen Verarbeitungskanal 1-23 verbunden ist.

Wenn die maximale Folgengröße auf sechs vergrößert und der vordefinierte Minimumabstand der Elektrodenstreifen auf acht verringert wird und die erlaubte Anzahl gleicher Zuordnungen zu den elektronischen Verarbeitungskanälen 154 auf 1 gesetzt wird, so können mit nur noch 11 elektronischen Verarbeitungskanälen sogar 162 Elektrodenstreifen abgedeckt werden. Eine entsprechende Lösung ist zum Beispiel mit der folgenden Kanalbelegung gegeben:

1, 2, 3, 4, 5, 6, 7, 8, 9, 1, 2, 10, 3, 4, 11, 5, 6, 9, 1, 7,
2, 8, 3, 10, 4, 6, 5, 1, 11, 7, 2, 3, 9, 4, 8, 6, 5, 10, 1,
2, 7, 9, 11, 3, 4, 6, 10, 5, 2, 8, 1, 9, 11, 4, 7, 3, 6, 2,
10, 8, 5, 9, 4, 11, 3, 7, 1, 2, 6, 10, 9, 8, 11, 4, 5, 7, 3,
1, 10, 6, 9, 2, 4, 8, 11, 7, 3, 10, 5, 9, 1, 6, 4, 11, 2, 3,
8, 7, 5, 9, 10, 4, 1, 2, 11, 6, 8, 5, 3, 10, 9, 4, 7, 11, 2,
8, 6, 1, 3, 9, 10, 5, 7, 4, 2, 11, 1, 6, 3, 8, 10, 7, 4, 5,
2, 9, 11, 6, 1, 10, 7, 8, 4, 5, 3, 2, 6, 11, 10, 9, 7, 1, 5,
8, 2, 4, 6, 3, 11, 7, 9, 5.

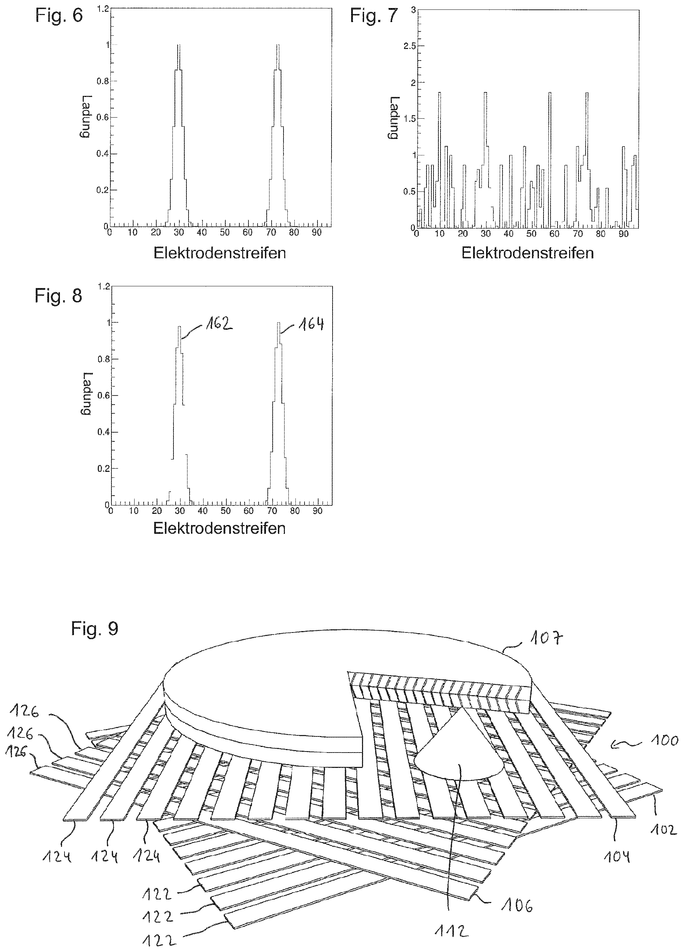

Bezug nehmend auf die Fig. 6 bis 8 sind die Ladungsverteilungen auf den 48 ersten Elektrodenstreifen 122 und den 48 zweiten Elektrodenstreifen 124 der gekreuzten Streifenanode 110, d.h. insgesamt 96 gekreuzten Elektrodenstreifen 122, 124, aus Fig. 4 und 5 dargestellt. Auf der x-Achse ist die jeweilige Nummer des Elektrodenstreifens aufgetragen, wobei die Nummer 1 bis 48 die ersten Elektrodenstreifen 122, also die Elektrodenstreifen, die die Ortsauflösung in x-Richtung bewerkstelligen und die Nummer 49 bis 96 die zweiten Elektrodenstreifen 124, also die Elektrodenstreifen, die die Ortsauflösung in y-Richtung bewerkstelligen, bezeichnet. Die y-Achse zeigt die Ladung in willkürlichen Einheiten auf dem jeweiligen Elektrodenstreifen mit der Nummer 1 bis 96. Mit anderen Worten zeigen die Fig. 6 bis 8 eine über die ersten und zweiten Elektrodenstreifen bzw. die beiden Raumdimensionen - hier die x- und y-Richtung - kombinierte Ladungsverteilung.

Fig. 6 zeigt die wahre Ladungsverteilung, wie sie tatsächlich auf den 96 Elektrodenstreifen vorhanden ist und wie sie gemäß der bislang verwendeten Signalverarbeitung gemessen worden wäre, d.h. wenn jeder der Elektrodenstreifen 122, 124 ohne Kanalüberbelegung mit einem eigenen elektronischen Verarbeitungskanal 154 verbunden wäre.

Durch die über Kreuz Zusammenschaltung der ersten und zweiten Elektrodenstreifen 122, 124, d.h.

durch die Überbelegung der elektronischen Verarbeitungskanäle 154 mit ersten und zweiten Elektrodenstreifen 122, 124 wird allerdings zunächst eine andere, nämlich eine scheinbare Ladungsverteilung gemessen. Fig. 7 zeigt die aufgrund der über Kreuz Zusammenschaltung der ersten und zweiten Elektrodenstreifen 122, 124, wie sie in Fig. 4 und 5 dargestellt ist, entstandene scheinbare Ladungsverteilung.

Aus der in Fig. 7 dargestellten scheinbaren Ladungsverteilung wird die wahre Ladungsverteilung rekonstruiert. Im vorliegenden Beispiel wird eine hierzu Kenngröße S als Funktion f($L_i$) wie folgt definiert:

$$S = \sum_{i=2}^{N-1} (L_i - L_{i-1} + L_i - L_{i+1})^2$$

Hierbei ist i der laufende Index für die ersten und zweiten Elektrodenstreifen, $L_i$ der Wert des gemessenen Ladungssignals auf dem Elektrodenstreifen mit dem Index i, und N die Gesamtzahl der ersten und zweiten Elektrodenstreifen. Im vorliegenden Beispiel ist demnach N = 96. Die Kenngröße S ist ein Maß für die Glattheit der Ladungsverteilung. Die zu rekonstruierende wahre Ladungsverteilung stellt zwar kein absolutes Minimum der Kenngröße S dar, liegt dem absoluten Minimum allerdings sehr nahe. Daher wird für die Rekonstruktion der Ladungsverteilung aus der scheinbaren Ladungsverteilung die Kenngröße S minimiert. Hierzu wird z.B. die Ladungsverteilung in kleinen Schritten variiert und die Kenngröße S jedes Mal neu berechnet. Dabei werden nur Schritte erlaubt, die die Kenngröße S weiter minimieren. Wenn z.B. einem Elektrodenstreifen Ladung abgezogen wird, dann wird diese Differenz auf seine "Partner" verteilt, denn die Gesamtladung in dieser Gruppe von Elektrodenstreifen ist durch die Ladungsmessung mit den ADCs bekannt und darf nicht verändert werden. Wenn z.B. einem Elektrodenstreifen Ladung hinzugefügt wird, dann wird diese Differenz von seinen "Partnern" abgezogen. Mit anderen Worten wird die Minimierung der Kenngröße S unter Berücksichtigung der jeweils auf den Gruppen von zusammengeschalteten Elektrodenstreifen gemessenen Gesamtladungsmengen durchgeführt.

Zusätzlich werden in dem vorliegenden Beispiel noch alle diejenigen der ersten und zweiten Elektrodenstreifen 122, 124 blockiert, die zu keinem großen Peak in der Ladungsverteilung gehören, wobei dieser Schritt vorzugsweise erst nach einigen Iterationen durchgeführt wird, nämlich wenn große Peaks angefangen haben sich abzuzeichnen. Dieser Schritt dient zunächst im Wesentlichen dazu, die Geschwindigkeit des Algorithmus zu erhöhen. Dieser Schritt erbringt allerdings auch bessere Ergebnisse, da kleine flache Nebenpeaks vermieden werden und damit der Algorithmus gezwungen wird, die Ladung in den Hauptpeaks unterzubringen. Danach wird die Kenngröße S vorzugsweise nochmals minimiert. Das Ergebnis der rekonstruierten Ladungsverteilung nach dieser Minimierung ist in Fig. 8 dargestellt. Es ist erkennbar, dass die rekonstruierte Ladungsverteilung in Fig. 8 mit der wahren Ladungsverteilung in Fig. 6 fast identisch übereinstimmt.

Bei der Rekonstruktion können je nach Anforderung auch noch weitere Kriterien angewendet werden, um falsche Minima bei der Minimierung der Kenngröße S zu vermeiden. Beispielsweise kann gefordert werden, dass mindestens zwei Peaks entstehen müssen, deren Integrale weitestgehend gleich sind und/oder dass beide Peaks etwa die gleiche Breite aufweisen. Das Rekonstruktionsverfahren kann auch bei mehreren im Nanosekundenbereich nacheinander auftretenden oder sogar gleichzeitigen Treffern (Multihits) eingesetzt werden. Je mehr elektronische Verarbeitungskanäle 154 beziehungsweise ADCs 158 verwendet werden, desto robuster wird das Rekonstruktionsverfahren. Bei dem vorliegenden Detektorsystem wird demnach die Ladungsmenge auf den Elektrodenstreifen gemessen und es wird dann aus der vermischten scheinbaren Ladungsverteilung (Fig. 7) diejenige Kombination aus der gemessenen Ladungsmenge und den über Kreuz zusammengeschalteten Elektrodenstreifen 122, 124 ermittelt, die am plausibelsten diese Ladungsmengen erklären kann. Wenn die ursprüngliche Ladungsverteilung rekonstruiert wurde, kann aus der rekonstruierten Ladungsverteilung (Fig. 8) der ursprüngliche Auftreffort der Elektronenwolke 112 in beiden Dimensionen durch Schwerpunktsbildung der beiden Peaks 162, 164 bestimmt werden. Hierdurch ist die Auflösung wesentlich besser als bei einem System, das lediglich digital bestimmt, ob eine Elektrode ein Signal erhalten hat oder nicht und daraus ein Bitmuster erzeugt, dass dann den Ort codiert.

In einem Beispiel ist die Verwendung von langsamen ladungsintegrierenden Verstärkern 156 und langsamen ADCs 158 möglich. Allerdings werden bevorzugt schnelle ladungssensitive Verstärker 156 und Transientenrekorder 158 (sogenannte schnelle Digitizer) mit einer Samplingrate von mindestens 10 Megasamples/s verwendet. Für eine gute Multihitauflösung werden Transientenrekorder mit einer Samplingrate von vorzugsweise mindestens 125 Megasamples/s und/oder vorzugsweise kleiner oder gleich 1,25 Gigasamples/s, ggf. vorzugsweise kleiner oder gleich 2 Gigasamples/s verwendet.

Grundsätzlich kann mit den wie in Fig. 1 und 2 schematisch dargestellten gekreuzten Streifenanoden 100 eine zweidimensionale Ortsmessung durch Ladungswichtung mit einer Ortsauflösung von besser als 1 mm auf einer Detektorfläche von 10 mm x 10 mm bis 1000 mm x 1000 mm erzielt werden. Mit dem in Fig. 4 und 5 dargestellten Beispiel einer gekreuzten Streifenanode 100 sowie der anhand der Fig. 4 bis Fig. 8 dargestellten Überbelegung der elektronischen Verarbeitungskanäle 154 ist eine Ortsauflösung von besser als 0,15 mm zu erwarten, möglicherweise sogar bis zu 0,03 mm, und zwar innerhalb eines Intervalls für die Detektorgröße von etwa 23 mm x 23 mm bis etwa 155 mm x 155 mm.

In vorteilhafter Weise wird durch die Mehrfachbelegung der elektronischen Verarbeitungskanäle 154, wobei zumindest einer der elektronischen Verarbeitungskanäle 154 über Kreuz auch für die jeweils andere Ortsdimension benutzt wird, eine Einsparung von elektronischen Auswertekanälen 154 erreicht. Ist dem Fachmann ersichtlich, dass die in Fig. 1 bis 5 dargestellten Beispiele mit zwei unter 90° gekreuzten Streifenlagen 102, 104 mit unter 90° gekreuzten Elektrodenstreifen 122, 124 bevorzugte Beispiele darstellen. Bezug nehmend auf Fig. 9 kann die gekreuzte Streifenanode 100 z.B. durch eine dritte Streifenlage 106 ergänzt werden, wobei dann die ersten, zweiten und dritten Elektrodenstreifen 122, 124, 126 der ersten, zweiten bzw. dritten Streifenlage 102, 104, 106 jeweils relativ zueinander unter einem Winkel angeordnet sind, vorzugsweise jeweils unter einem Winkel von 60°.

Eine gekreuzte Streifenanode 100 mit insgesamt drei Streifenlagen 102, 104, 106 hat den Vorteil, dass eine intrinsische Linearitätskorrektur durchgeführt werden kann und die Multihitfähigkeit weiter verbessert wird.

Wenn erste, zweite und dritte Elektrodenstreifen 122, 124, 126 aller drei Streifenlagen 102, 104, 106 über Kreuz zusammengeschaltet werden, erhält man bei zwei im Nanosekundenbereich oder schneller folgenden Hits insgesamt sechs Peaks in der Ladungsverteilung. Durch die dreifache über Kreuz Überbelegung kann das dazu führen, dass in fast allen elektronischen Verarbeitungskanälen 154 signifikante Ladungssignale auftreten. Daher kann es sinnvoll sein, auch bei drei oder mehr verwendeten überkreuzten Streifenlagen lediglich erste und zweite Elektrodenstreifen 122, 124 der ersten und zweiten Streifenlage 102, 104 über Kreuz zusammenzuschalten, nicht jedoch die dritten Elektrodenstreifen 126 der dritten Streifenlage 106 oder gar noch weitere Elektrodenstreifen von noch weiteren Streifenlagen.

Bei Verwendung einer gekreuzten Streifenanode 100 mit drei gekreuzten Streifenlagen 102, 104, 106 werden somit entweder erste und zweite Elektrodenstreifen 122, 124 über Kreuz zusammen geschaltet und die dritten Elektrodenstreifen 126 der dritten Streifenlage 106 werden nicht über Kreuz mit den ersten und zweiten Elektrodenstreifen 122, 124 zusammengeschaltet, sondern separat ausgelesen oder es werden erste, zweite und dritte Elektrodenstreifen 122, 124, 126 aller drei Streifenlagen 102, 104, 106 miteinander über Kreuz zusammengeschaltet.

Unabhängig hiervon oder zusätzlich können die dritten Elektrodenstreifen 126 der dritten Streifenlage 106 von geringerer Anzahl und/oder breiter sein als die ersten und zweiten Elektrodenstreifen 122, 124, insbesondere wenn die dritte Streifenlage lediglich für eine grobe Ortszuordnung benutzt werden soll.

Bezug nehmend auf alle Ausführungsformen der Erfindung sind die ersten, zweiten und ggf. dritten Elektrodenstreifen 122, 124 ,126 vorzugsweise nicht breiter als 8 mm. Bevorzugt sollte die Breite der ersten und zweiten Elektrodenstreifen 122, 124 zwischen 0,5 mm und 4 mm betragen, besonders bevorzugt im Bereich von etwa 2 mm+/- 1 mm.

Es ist auch denkbar, anstatt von geradlinigen Elektrodenstreifen eine Streifenanode 100 entsprechend eines Polarkoordinatensystems mit Winkel- und Radiuskodierung als linear unabhängige Elektrodenstreifen zu verwenden.

Die Elektrodenstreifen 122, 124 müssen nicht notwendigerweise gleich lang sein. Wenn z.B. eine runde Fläche abgedeckt werden soll können die äußeren Elektrodenstreifen kürzer sein als die inneren.

Mit dem vorstehend beschriebenen Detektorsystem ist es trotz der Überbelegung möglich, zwei oder ggf. sogar mehr als zwei in einem zeitlichen Abstand von kleiner als 20 ns einschlagende Teilchen 108 eindeutig in Ort und Zeit nachweisen zu können (Multihitfähigkeit).

Zusammenfassend schlägt die Erfindung vor, eine Überbelegung über die beiden gekreuzten Streifenlagen 102, 104 hinweg vorzunehmen, d.h. eine Vermischung der ersten und zweiten Elektrodenstreifen 122, 124 in der Verarbeitungselektronik, so dass zumindest ein elektronischer Verarbeitungskanal 154 nicht mehr nur noch einer einzigen Raumdimension oder Raumkoordinate zugeordnet ist, sondern mit Streifenelektroden 122, 124 beider Raumdimensionen belegt ist. Zusätzlich wird die Elektronenwolke 112 bzw. werden die von der Elektronenwolke 112 induzierten Ladungssignale (z.B. mittels Bildladungsauskopplung gemäß DE 44 29 925 C1) auf mehr als zwei, oder mehr als auf mehr als drei, Elektrodenstreifen 122, 124 je Streifenlage 102, 104 ausgedehnt und es wird eine Ortsbestimmung in der örtlichen Ladungsverteilung, z.B. durch Schwerpunktsbildung, durchgeführt.

Es ist dem Fachmann ersichtlich, dass die vorstehend beschriebenen Ausführungsformen beispielhaft zu verstehen sind und die Erfindung nicht auf diese beschränkt ist, sondern in vielfältiger Weise variiert werden kann, ohne den Schutzbereich der Ansprüche zu verlassen.

**Patentansprüche**

1.  Detektorsystem zum zweidimensional ortsaufgelösten und zeitaufgelösten Nachweisen von Ladungswolken (112) umfassend:

    eine Streifenanode (100) zum Nachweisen von Ladungssignalen, welche durch die Ladungswolken (112) induziert werden,

    wobei die Streifenanode (100) zumindest eine erste Streifenlage (102) mit einer Vielzahl von auslesbaren ersten Elektrodenstreifen (122) und eine zweite Streifenlage (104) mit einer Vielzahl von auslesbaren zweiten Elektrodenstreifen (124) umfasst, wobei die Richtungen der ersten und zweiten Elektrodenstreifen (122, 124) linear unabhängig voneinander sind, um die Ortsauflösung in zwei Raumdimensionen zu bewerkstelligen,

eine Ausleseelektronik mit einer Vielzahl von ladungsmessenden elektronischen Verarbeitungskanälen (154), wobei die ersten und zweiten Elektrodenstreifen (122, 124) jeweils mit einem der ladungsmessenden elektronischen Verarbeitungskanäle (154) verbunden sind, um die von den ersten und zweiten Elektrodenstreifen (122, 124) empfangenen Ladungssignale kanalweise zu verarbeiten,

wobei zumindest einige der ladungsmessenden elektronischen Verarbeitungskanäle (154) jeweils mit mehreren der Elektrodenstreifen (122, 124) belegt sind, so dass die Anzahl der elektronischen ladungsmessenden Verarbeitungskanäle (154) geringer ist als die Summe der Anzahl der ersten und zweiten Elektrodenstreifen (122, 124), wobei die Mehrfachbelegung der ladungsmessenden elektronischen Verarbeitungskanäle (154) bezogen auf die erste und die zweite Streifenlage (102, 104) zumindest teilweise über Kreuz erfolgt, derart dass zumindest einige der ladungsmessenden elektronischen Verarbeitungskanäle (154) gleichzeitig sowohl mit ersten als auch mit zweiten Elektrodenstreifen (122, 124) verbunden sind und deshalb die von den ladungsmessenden elektronischen Verarbeitungskanälen (154) verarbeiteten Ladungssignale der ersten und zweiten Elektrodenstreifen (122, 124) zumindest teilweise über Kreuz überlagert sind und die ladungsmessenden elektronischen Verarbeitungskanäle (154) somit eine über Kreuz überlagerte scheinbare Ladungsverteilung der ersten und zweiten Elektrodenstreifen (122, 124) erzeugen, und

einen Auswerterechner (160), welcher aus der von den ladungsmessenden elektronischen Verarbeitungskanälen (154) erzeugten scheinbaren Ladungsverteilung die wahre Ladungsverteilung der ersten und zweiten Elektrodenstreifen (122, 124) rekonstruiert und den zweidimensionalen Auftreffort der jeweils nachzuweisenden Ladungswolke (112) berechnet.

2. Detektorsystem nach Anspruch 1,
wobei eine Kenngröße S als Funktion $S=f(L_i)$ der von den ladungsmessenden elektronischen Verarbeitungskanälen (154) gemessenen Ladungssignale $L_i$

der ersten und zweiten Elektrodenstreifen (122, 124) berechnet wird, wobei i ein Index für die ersten und zweiten Elektrodenstreifen (122, 124) und $L_i$ der Wert des gemessenen Ladungssignals mit dem Index i ist, und die Kenngröße S minimiert wird.

3. Detektorsystem nach Anspruch 2,
wobei zur Minimierung der Kenngröße S die Ladungsverteilung der Ladungssignale $L_i$ der ersten und/oder zweiten Elektrodenstreifen (122, 124) variiert wird und bei der Variation der Ladungsverteilung die Ladungsmengen in zumindest einem der ladungsmessenden elektronischen Verarbeitungskanäle (154) auf dem gemessenen Wert festgehalten wird.

4. Detektorsystem nach Anspruch 2 oder 3,
wobei die Kenngröße S als Funktion

$$S = \sum_{i=2}^{N-1} (L_i - L_{i-1} + L_i - L_{i+1})^2$$

berechnet wird, wobei N die Gesamtzahl der ersten und zweiten Elektrodenstreifen (122, 124) ist.

5. Detektorsystem nach einem der vorstehenden Ansprüche, umfassend einen zweidimensional ortsauflösenden Sekundärelektronenvervielfacher (107), welcher aus einzelnen zu detektierenden atomaren oder molekularen Teilchen oder Photonen (108) eine lokalisierte Elektronenwolke (112) erzeugt, die das Ladungssignal auf der Streifenanode (100) induziert.

6. Detektorsystem nach einem der vorstehenden Ansprüche, wobei die ladungsmessenden elektronischen Verarbeitungskanäle (154) jeweils einen Analog-Digital-Wandler (158) umfassen, um die Ladungssignale der Elektrodenstreifen zu digitalisieren.

7. Detektorsystem nach Anspruch 6,
wobei die Analog-Digital-Wandler (158) in Form von Transientenrekordern ausgebildet sind, welche den zeitlichen Signalverlauf des jeweiligen Ladungssignals digitalisieren.

8. Detektorsystem nach einem der vorstehenden Ansprüche, wobei die ersten und zweiten Elektrodenstreifen (122, 124) zum Empfangen von Ladungssignalen jeweils als lineare Aneinanderreihung von mittels Verbindungsleitungsabschnitten (142, 144) miteinander verbundenen flächigen Antennenelementen (132, 134) ausgebildet sind, wobei die Fläche der Antennenelemente (132, 134) erheblich größer ist, als die der Verbindungsleitungsabschnitte (142, 144) und die flächigen Antennenelemente (132, 134) der ersten und zweiten Streifenlage (102, 104) schachbrettartig in einer Ebene miteinander verschränkt sind und sich die Verbindungsleitungsabschnitte (142, 144) der ersten und zweiten Streifenlage (102, 104) elektrisch isolierend überkreuzen.

9. Detektorsystem nach einem der vorstehenden Ansprüche, wobei zumindest eine dritte Streifenlage (106) mit einer Vielzahl von auslesbaren dritten Elektrodenstreifen (126) umfasst ist und die ersten, zweiten und dritten Elektrodenstreifen (122, 124, 126) alle zueinander unter einem Winkel verlaufen.

10. Detektorsystem nach Anspruch 9,
wobei zumindest einige der ladungsmessenden elektronischen Verarbeitungskanäle (154) gleichzeitig jeweils mit zumindest einem der ersten Elektrodenstreifen (122), mit zumindest einem der zweiten Elektrodenstreifen (124) und mit zumindest einem der dritten Elektrodenstreifen (126) belegt sind.

11. Detektorsystem nach einem der vorstehenden Ansprüche, wobei jeweils mehrere der ersten Elektrodenstreifen (122) und jeweils mehrere der zweiten Elektrodenstreifen (124) über Kreuz zu Gruppen zusammengeschaltet sind, so dass zumindest einige der ladungsmessenden elektronischen Verarbeitungskanäle (154) mit jeweils einer Gruppe aus den mehreren der ersten Elektrodenstreifen 122 und den mehreren der zweiten Elektrodenstreifen (124) verbunden sind.

12. Detektorsystem nach einem der vorstehenden Ansprüche, wobei die über Kreuz verbundenen ersten und zweiten Elektrodenstreifen (122, 124) direkt auf der Streifenanode (100) miteinander verbunden sind.

13. Gekreuzte Streifenanode (100) zum zweidimensional ortsaufgelösten und zeitaufgelösten Nachweisen von Ladungssignalen, welche von Ladungswolken (112) induziert werden, umfassend:

zumindest eine erste Streifenlage (102) mit einer Vielzahl von auslesbaren ersten Elektrodenstreifen (112) und eine zweite Streifenlage (104) mit einer Vielzahl von auslesbaren zweiten Elektrodenstreifen (124), wobei die Richtungen der ersten und zweiten Elektrodenstreifen (122, 124) linear unabhängig voneinander sind, um die Ortsauflösung in zwei Raumdimensionen zu bewerkstelligen, **dadurch gekennzeichnet dass**:

die Elektrodenstreifen (122, 124) auf der Streifenanode (100) bezogen auf die erste und zweite Streifenlage (102, 104) über Kreuz zu Gruppen zusammengeschaltet sind, dergestalt dass zumindest in einigen der Gruppen sowohl erste Elektrodenstreifen (122) als auch zweite Elektrodenstreifen (124) miteinander verbunden sind und jede der Gruppen von über Kreuz zusammengeschalteten Elektrodenstreifen (122, 124) jeweils mit einem ladungsmessenden elektronischen Verarbeitungskanal (154) verbindbar ist, um die von den Ladungswolken (112) induzierten Ladungssignale der bezogen auf die erste und zweite Streifenlage (102, 104) über Kreuz zusammengeschalteten Gruppen kanalweise zu verarbeiten.

14. Gekreuzte Streifenanode (100) nach Anspruch 13, wobei die ersten und zweiten Elektrodenstreifen (122, 124) zum Empfangen von Ladungssignalen jeweils als lineare Aneinanderreihung von mit Verbindungsleitungsabschnitten (142, 144) miteinander verbundenen flächigen Antennenelementen (132, 134) ausgebildet sind, wobei die Fläche der Antennenelemente (132, 134) erheblich größer ist, als die der Verbindungsleitungsabschnitte (142, 144) und die flächigen Antennenelemente (132, 134) der ersten und zweiten Streifenlage (102, 104) schachbrettartig in einer Ebene miteinander verschränkt sind und sich die Verbindungsleitungsabschnitte (142, 144) der ersten und zweiten Streifenlage (102, 104) elektrisch isolierend überkreuzen.

15. Gekreuzte Streifenanode (100) nach Anspruch 13 oder 14,

wobei zumindest eine dritte Streifenlage (106) mit einer Vielzahl von auslesbaren dritten Elektrodenstreifen (126) umfasst ist und die ersten, zweiten und dritten Elektrodenstreifen (122, 124, 126) jeweils zueinander unter einem Winkel verlaufen, und
wobei die Elektrodenstreifen (122, 124, 126) auf der Streifenanode (100) bezogen auf die erste, zweite und dritte Streifenlage (102, 104, 106) über Kreuz zu Gruppen zusammengeschaltet sind, dergestalt dass zumindest in einigen der Gruppen sowohl erste Elektrodenstreifen (122) als auch zweite Elektrodenstreifen (124) als auch dritte Elektrodenstreifen (126) miteinander verbunden sind und jede der Gruppen von über Kreuz zusammengeschalteten Elektrodenstreifen (122, 124, 126) jeweils mit einem ladungsmessenden elektronischen Verarbeitungskanal (154) verbindbar ist, um die von den Ladungswolken induzierten Ladungssignale der bezogen auf die erste, zweite und dritte Streifenlage (102, 104, 106) über Kreuz zusammengeschalteten Gruppen kanalweise zu verarbeiten.

16. Gekreuzte Streifenanode (100) nach Anspruch 15,

wobei die dritten Elektrodenstreifen (126) der dritten Streifenlage (106) eine andere Breite aufweisen als die ersten und/oder zweiten Elektrodenstreifen (122, 124).

**Claims**

1. A detector system for two-dimensionally position-resolved and time-resolved detection of charge clouds (112), comprising:

   a strip anode (100) for detecting charge signals induced by the charge clouds (112);

   wherein the strip anode (100) comprises at least a first strip layer (102) including a multitude of readable first electrode strips (122), and a second strip layer (104) including a multitude of readable second electrode strips (124), wherein the directions of the first and second electrode strips (122, 124) are linearly independent of each other in order to achieve the position resolution in two spatial dimensions;

   read-out electronics comprising a multitude of charge-sensing electronic processing channels (154), wherein each of the first and second electrode strips (122, 124) is connected to a respective one of the charge-sensing electronic processing channels (154) in order to process the charge signals received from the first and second electrode strips (122, 124) channel by channel;

   wherein at least some of the charge-sensing electronic processing channels (154) are each associated with a plurality of the electrode strips (122, 124), so that the number of electronic charge-sensing processing channels (154) is less than the total number of first and second electrode strips (122, 124);

   wherein the multiple association of the charge-sensing electronic processing channels (154) with respect to the first and second strip layers (102, 104) is made at least partially crosswise, such that at least some of the charge-sensing electronic processing channels (154) are simultaneously connected to both, first and second electrode strips (122, 124) and therefore the charge signals of the first and second electrode strips (122, 124) processed by the charge-sensing electronic processing channels (154) are at least partially superimposed crosswise and the charge-sensing electronic processing channels (154) hence generate a crosswise superimposed apparent charge distribution of the first and second electrode strips (122, 124); and

   an evaluation computer (160) which reconstructs the actual charge distribution of the first and second electrode strips (122, 124) from the apparent charge distribution generated by the charge-sensing electronic processing channels (154) and calculates the two-dimensional impingement location of the respective charge cloud (112) to be detected.

2. The detector system according to claim 1, wherein a parameter S is calculated as a function $S=f(L_i)$ of the charge signals $L_i$ of the first and second electrode strips (122,124) measured by the charge-sensing electronic processing channels (154), wherein $i$ is an index for the first and second electrode strips (122, 124), and $L_i$ is the value of the measured charge signal of index $i$, and wherein the parameter S is minimized.

3. The detector system according to claim 2, wherein, for minimizing the parameter S, the charge distribution of the charge signals $L_i$ of the first and/or second electrode strips (122, 124) is varied, and wherein during the variation of the charge distribution the amounts of charge is kept at the measured value in at least one of the charge-sensing electronic processing channels (154).

4. The detector system according to claim 2 or 3, wherein the parameter S is calculated as a function

$$S = \sum_{i=2}^{N-1} (L_i - L_{i-1} + L_i - L_{i+1})^2 \,,$$

wherein N is the total number of the first and second electrode strips (122, 124).

5. The detector system according to any one of the preceding claims, comprising a two-dimensionally position-resolving photomultiplier tube (107) which generates, from atomic or molecular particles or photons (108) to be detected individually, a localized electron cloud (112) which induces the charge signal on the strip anode (100).

6. The detector system according to any one of the preceding claims, wherein the charge-sensing electronic processing channels (154) each comprise an analogue-to-digital converter (158) for digitizing the charge signals of the electrode strips.

7. The detector system according to claim 6, wherein the analogue-to-digital converters (158) are configured as transient recorders which digitize the signal-time profile of the respective charge signal.

8.  The detector system according to any one of the preceding claims, wherein the first and second electrode strips (122, 124) for receiving charge signals are provided in the form of a series of linearly aligned plane antenna elements (132, 134) interconnected by connecting line sections (142, 144), wherein the surface area of the antenna elements (132,134) is substantially larger than that of the connecting line sections (142,144), and wherein the plane antenna elements (132, 134) of the first and second strip layers (102, 104) are interlaced in a checkerboard-like manner in a plane and the connecting line sections (142, 144) of the first and second strip layers (102, 104) cross each other in electrically insulated manner.

9.  The detector system according to any one of the preceding claims, comprising at least a third strip layer (106) including a multitude of readable third electrode strips (126), wherein all of the first, second and third electrode strips (122, 124, 126) extend at an angle relative to one another.

10. The detector system according to claim 9, wherein at least some of the charge-sensing electronic processing channels (154) are each simultaneously associated with at least one of the first electrode strips (122), with at least one of the second electrode strips (124), and with at least one of the third electrode strips (126).

11. The detector system according to any one of the preceding claims, wherein a respective plurality of the first electrode strips (122) and a respective plurality of the second electrode strips (124) are interconnected crosswise to form respective sets, so that at least some of the charge-sensing electronic processing channels (154) are connected to a set of the plurality of first electrode strips (122) and the plurality of second electrode strips (124) in each case.

12. The detector system according to any one of the preceding claims, wherein the crosswise connected first and second electrode strips (122, 124) are directly connected to each other on the strip anode (100).

13. A crossed-strip anode (100) for two-dimensionally position-resolved and time-resolved detection of charge signals induced by charge clouds (112), comprising:

    at least a first strip layer (102) including a multitude of readable first electrode strips (112) and a second strip layer (104) including a multitude of readable second electrode strips (124), wherein the directions of the first and second electrode strips (122, 124) are linearly independent of each other in order to achieve the position resolution in two spatial dimensions;

**characterized in that**:

    the electrode strips (122, 124) on the strip anode (100) are crosswise connected with respect to the first and second strip layers (102,104) so as to form sets, such that at least in some of the sets both, first electrode strips (122) and second electrode strips (124) are interconnected and each of the sets of crosswise connected electrode strips (122, 124) is connectable to a respective charge-sensing electronic processing channel (154) in order to process, channel by channel, the charge signals as induced by the charge clouds (112) of the sets crosswise connected with respect to the first and second strip layers (102, 104).

14. The crossed-strip anode (100) according to claim 13, wherein the first and second electrode strips (122, 124) for receiving charge signals are provided in the form of a series of linearly aligned plane antenna elements (132, 134) interconnected by connecting line sections (142, 144), wherein the surface area of the antenna elements (132, 134) is substantially larger than that of the connecting line sections (142, 144), and wherein the plane antenna elements (132, 134) of the first and second strip layers (102, 104) are interlaced in a checkerboard-like manner in a plane and the connecting line sections (142,144) of the first and second strip layers (102, 104) cross each other in electrically insulated manner.

15. The crossed-strip anode (100) according to claim 13 or 14,

    comprising at least a third strip layer (106) including a multitude of readable third electrode strips (126), wherein the first, second and third electrode strips (122, 124, 126) extend at a respective angle to each other; and
    wherein the electrode strips (122,124,126) on the strip anode (100) are crosswise connected with respect to the first, second and third strip layers (102, 104, 106) so as to form sets, such that at least in some of the sets first electrode strips (122) and second electrode strips (124) and third electrode strips (126) are interconnected and each of the sets of crosswise interconnected electrode strips (122, 124, 126) is connectable to a respective charge-sensing electronic processing channel (154), in order to process, channel by channel, the charge signals as induced by the charge clouds of the sets crosswise connected with respect to the first, second and third strip layers (102, 104, 106).

16. The crossed-strip anode (100) according to claim 15, wherein the third electrode strips (126) of the third strip layer (106) have a different width than the first and/or second electrode strips (122, 124).

## Revendications

1. Système détecteur destiné à la détection d'un nuage de charge (112) avec résolution spatiale bidimensionnelle et résolution temporelle, comprenant une anode à bandes (100) pour détecter des signaux de charge qui sont induits par les nuages de charge (112), l'anode à bandes (100) comportant au moins une première couche de bandes (102) avec une pluralité de premières bandes d'électrode (122) pouvant être lues, et une deuxième couche de bandes (104) avec une pluralité de deuxièmes bandes d'électrode (124) pouvant être lues, les sens des premières et deuxièmes bandes d'électrode (122, 124) étant linéairement indépendants l'un de l'autre, afin de réaliser la résolution spatiale dans deux dimensions dans l'espace, une électronique de lecture avec une pluralité de canaux de traitement (154) électroniques mesurant la charge, les premières et deuxièmes bandes d'électrode (122, 124) étant reliées respectivement à l'un des canaux de traitement (154) électroniques mesurant la charge, afin de traiter par canal les signaux de charge reçus par les premières et deuxièmes bandes d'électrode (122, 124), au moins quelques-uns des canaux de traitement (154) électroniques, mesurant la charge, étant occupés respectivement par plusieurs des bandes d'électrode (122, 124), de sorte que le nombre des canaux de traitement (154) électroniques mesurant la charge est plus faible que la somme du nombre des premières et deuxièmes bandes d'électrode (122, 124), l'occupation multiple des canaux de traitement (154) électroniques mesurant la charge, par rapport aux première et deuxième couches de bandes (102, 104), s'effectuant au moins en partie en croix, de telle sorte qu'au moins quelques-uns des canaux de traitement (154) électroniques mesurant la charge sont reliés en même temps aussi bien à des premières qu'à des deuxièmes bandes d'électrode (122, 124) et que pour cette raison les signaux de charge des premières et deuxièmes bandes d'électrode (122, 124), traités par les canaux de traitement (154) électroniques mesurant la charge, sont superposés au moins en partie en croix, et les canaux de traitement (154) électroniques mesurant la charge produisent ainsi une répartition de charge apparente, superposée en croix, des premières et deuxièmes bandes d'électrode (122, 124), et un ordinateur d'évaluation (160) qui reconstitue, à partir de la répartition de charge apparente produite par les canaux de traitement (154) électroniques mesurant la charge, la répartition de charge réelle des premières et deuxièmes bandes d'électrode (122, 124) et calcule le lieu d'impact bidimensionnel du nuage de charge (112) respectif devant être détecté.

2. Système détecteur selon la revendication 1, dans lequel une caractéristique S est calculée en tant que fonction $S=f(L_i)$ des signaux de charge $L_i$ des premières et deuxièmes bandes d'électrode (122, 124), mesurés par les canaux de traitement (154) électroniques mesurant la charge, où i est un indice pour les premières et deuxièmes bandes d'électrode (122, 124) et $L_i$ est la valeur du signal de charge mesuré avec l'indice i, et la caractéristique S est minimisée.

3. Système détecteur selon la revendication 2, dans lequel, pour minimiser la caractéristique S, on fait varier la répartition de charge des signaux de charge $L_i$ des premières et/ou deuxièmes bandes d'électrode (122, 124) et, lors de la variation de la répartition de charge, on maintient les quantités de charge à la valeur mesurée, dans au moins un des canaux de traitement (154) électroniques mesurant la charge.

4. Système détecteur selon la revendication 2 ou 3, dans lequel la caractéristique S est calculée en tant que fonction

$$ S = \sum_{i=2}^{N-1} (L_i - L_{i-1} + L_i - L_{i+1})^2, $$

où N est le nombre total des premières et deuxièmes bandes d'électrode (122, 124).

5. Système détecteur selon une des revendications précédentes, comprenant un multiplicateur d'électrons secondaires (107) à résolution spatiale bidimensionnelle, qui génère, à partir de particules ou de photons (108) atomiques ou moléculaires individuelles à détecter, un nuage électronique (112) localisé qui induit le signal de charge sur l'anode à bandes (100).

6. Système détecteur selon une des revendications précédentes, dans lequel les canaux de traitement (154) électroniques mesurant la charge comprennent chacun un convertisseur analogique-numérique (158) afin de numériser les signaux de charge des bandes d'électrode.

**7.** Système détecteur selon la revendication 6, dans lequel les convertisseurs analogique-numérique (158) sont réalisés sous forme d'enregistreurs de transitoires qui numérisent l'évolution dans le temps du signal de charge concerné.

**8.** Système détecteur selon une des revendications précédentes, dans lequel les premières et deuxièmes bandes d'électrode (122, 124) sont réalisées respectivement sous forme de succession linéaire d'éléments d'antenne (132, 134) plats reliés les uns aux autres au moyen de tronçons de ligne de liaison (142, 144), à des fins de réception de signaux de charge, la surface des éléments d'antenne (132, 134) étant sensiblement plus grande que celle des tronçons de ligne de liaison (142, 144), et les éléments d'antenne (132, 134) plats des première et deuxième couches de bandes (102, 104) étant croisés entre eux à la manière d'un échiquier dans un plan, et les tronçons de ligne de liaison (142, 144) des première et deuxième couches de bandes (102, 104) se croisant avec isolation électrique.

**9.** Système détecteur selon une des revendications précédentes, dans lequel est comprise au moins une troisième couche de bandes (106) avec une multitude de troisièmes bandes d'électrode (126) pouvant être lues, et les premières, deuxièmes et troisièmes bandes d'électrode (122, 124, 126) s'étendent toutes en formant un angle les unes avec les autres.

**10.** Système détecteur selon la revendication 9, dans lequel au moins quelques-uns des canaux de traitement (154) électroniques mesurant la charge sont chacun occupés simultanément par au moins une des premières bandes d'électrode (122), par au moins une des deuxièmes bandes d'électrode (124) et par au moins une des troisièmes bandes d'électrode (126).

**11.** Système détecteur selon une des revendications précédentes, dans lequel respectivement plusieurs des premières bandes d'électrode (122) et respectivement plusieurs des deuxièmes bandes d'électrode (124) sont interconnectées en croix et en groupes, de sorte qu'au moins quelques-uns des canaux de traitement (154) électroniques mesurant la charge sont reliés respectivement à un groupe de la pluralité de premières bandes d'électrode (122) et de la pluralité de deuxièmes bandes d'électrode (124).

**12.** Système détecteur selon une des revendications précédentes, dans lequel les premières et deuxièmes bandes d'électrode (122, 124) reliées en croix sont reliées entre elles directement sur l'anode à bandes (100).

**13.** Anode à bandes (100) croisée destinée à la détection, avec résolution spatiale bidimensionnelle et résolution temporelle, de signaux de charge qui sont induits par des nuages de charge (112), comprenant :

au moins une première couche de bandes (102) avec une pluralité de premières bandes d'électrode (112) pouvant être lues, et une deuxième couche de bandes (104) avec une pluralité de deuxièmes bandes d'électrode (124) pouvant être lues, les sens des premières et deuxièmes bandes d'électrode (122, 124) étant linéairement indépendants l'un de l'autre, afin de réaliser la résolution spatiale dans deux dimensions dans l'espace,
**caractérisée en ce que** :

les bandes d'électrode (122, 124) sont interconnectées en croix et en groupes sur l'anode à bandes (100), par rapport aux première et deuxième couches de bandes (102, 104), de sorte qu'au moins dans quelques-uns des groupes, aussi bien des premières bandes d'électrode (122) que des deuxièmes bandes d'électrode (124) sont reliées entre elles et que chacun des groupes de bandes d'électrode (122, 124) interconnectées en croix peut être relié respectivement à un canal de traitement (154) électronique mesurant la charge, afin de traiter par canal les signaux de charge, induits par les nuages de charge (112), des groupes interconnectés en croix par rapport aux première et deuxième couches de bandes (102, 104).

**14.** Anode à bandes (100) croisée selon la revendication 13, dans laquelle les premières et deuxièmes bandes d'électrode (122, 124) sont réalisées respectivement sous forme de succession linéaire d'éléments d'antenne (132, 134) plats reliés les uns aux autres au moyen de tronçons de ligne de liaison (142, 144), à des fins de réception de signaux de charge, la surface des éléments d'antenne (132, 134) étant sensiblement plus grande que celle des tronçons de ligne de liaison (142, 144), et les éléments d'antenne (132, 134) plats des première et deuxième couches de bandes (102, 104) étant croisés entre eux à la manière d'un échiquier dans un plan, et les tronçons de ligne de liaison (142, 144) des première et deuxième couches de bandes (102, 104) se croisant avec isolation électrique.

**15.** Anode à bandes (100) croisée selon la revendication 13 ou 14,
dans laquelle est comprise au moins une troisième couche de bandes (106) avec une multitude de troisièmes bandes d'électrode (126) pouvant être lues, et les premières, deuxièmes et troisièmes bandes d'électrode (122, 124, 126) s'étendent toutes en formant un angle les unes avec les autres, et dans laquelle les bandes d'électrode (122, 124, 126) sont interconnectées en croix et en groupes sur l'anode à bandes (100), par rapport aux première, deuxième et troisième couches de bandes (102, 104, 106), de sorte qu'au moins dans quelques-uns des groupes, aussi bien des premières bandes d'électrode (122) que des deuxièmes bandes d'électrode (124) que des troisièmes bandes d'électrode (126) sont reliées entre elles et que chacun des groupes de bandes d'électrode (122, 124, 126) interconnectées en croix peut être relié respectivement à un canal de traitement (154) électronique mesurant la charge, afin de traiter par canal les signaux de charge, induits par les nuages de charge, des groupes interconnectés en croix par rapport aux première, deuxième et troisième couches de bandes (102, 104, 106).

16. Anode à bandes (100) croisée selon la revendication 15, dans laquelle les troisièmes bandes d'électrode (126) de la troisième couche de bandes (106) ont une largeur qui est différente de celle des premières et/ou deuxièmes bandes d'électrode (122, 124).

Fig. 1

Fig. 2

Fig. 3

EP 3 029 490 B1

Fig. 4

Elektrodenstreifen 49 bis 96

100

124

122

Elektrodenstreifen 1 bis 48

Fig. 5

Elektrodenstreifen 49 bis 96

100

124

112

Elektrodenstreifen 1 bis 48

Fig. 6

Fig. 7

Fig. 8

Fig. 9

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 6661013 B
- DE 102013109416 A1
- DE 4429925 C1

### In der Beschreibung aufgeführte Nicht-Patentliteratur

- **W.E. MCCLINTOCK ; C.A. BARTH ; R.E. STEELE ; G.M. LAWRENCE ; J.G. TIMOTHY.** *Appl. Opt.,* 1982, vol. 21, 3071
- **G.M. LAWRENCE ; W.E. MCCLINTOCK.** *Proc. SPIE,* 1996, vol. 2831, 104
- **J.F. PEARSON et al.** *Nuclear Instruments and Methods in Physics Research A,* 2003, vol. 513, 183-186
- **J.G. TIMOTHY ; G.H. MOUNT.** *Proc. SPIE,* 1979, vol. 183, 169
- **J. GETHYN TIMOTHY et al.** *Proc. SPIE 0172, Instrumentation in Astronomy,* 03. Mai 1979, vol. III, 199
- **BING FENG et al.** *Nuclear Instruments and Methods in Physics Research A,* 2004, vol. 535, 546-549
- **D.B. KASLE ; J.S. MORGAN.** *Proc. SPIE 1549, EUV, X-Ray, and Gamma-Ray Instrumentation for Astronomy,* 01. Oktober 1991, vol. II, 52
- *Nucl. Instrum. Methods Phys. Res. A,* 10. Februar 2009, vol. 610 (1), 118-122